Europäisches Patentamt

European Patent Office

Office européen des brevets

(11) Publication number: **0 030 070**
**B1**

# (12) EUROPEAN PATENT SPECIFICATION

(45) Date of publication of patent specification: 24.04.85

(51) Int. Cl.⁴: **C 22 F 1/04, B 64 C 1/00**

(21) Application number: 80303366.1

(22) Date of filing: 25.09.80

(54) Method for producing aircraft stringer material.

(30) Priority: 29.09.79 JP 125989/79
14.12.79 JP 163193/79
21.12.79 JP 165696/79

(43) Date of publication of application:
10.06.81 Bulletin 81/23

(45) Publication of the grant of the patent:
24.04.85 Bulletin 85/17

(84) Designated Contracting States:
CH DE FR GB IT LI NL SE

(56) References cited:
FR-A-2 393 070
GB-A-1 247 352
US-A-3 198 676
US-A-3 231 435
US-A-3 573 117
US-A-3 694 272
US-A-3 706 606
US-A-3 743 549
US-A-3 791 880
US-A-3 836 405
US-A-3 847 681

(73) Proprietor: SUMITOMO LIGHT METAL
INDUSTRIES LIMITED
4-4 Marunouchi 1-chome Chiyoda-Ku
Tokyo (JP)

(72) Inventor: Baba, Yoshio
143-1 Ohgatayama Narumi-cho Midori-ku
Nagoya-shi Aichi (JP)
Inventor: Uno, Teruo
198-41, Takabarisekoboh Idaka-cho Meitoh-ku
Nagoya-shi Aichi (JP)
Inventor: Yoshida, Hideo
16, 2-chome, Shohei-cho Mizuho-ku
Nagoya-shi Aichi (JP)

(74) Representative: Pearce, Anthony Richmond
et al
Marks & Clerk Alpha Tower Suffolk Street
Queensway Birmingham B1 1TT (GB)

(56) References cited:
US-A-3 881 966
US-A-3 947 297
US-A-4 092 181
US-A-4 222 797

Courier Press, Leamington Spa, England.

(56) References cited:

ALUMINIUM, Vol. 45, No. 7, 1969 Düsseldorf P. BRENNER "Entwicklung und Zukunft der AlZnMg- und AlZnMgCu-Legierungen" pages 431 to 439

ALUMINIUM, Vol. 48, No. 11, 1972 Düsseldorf M. MARKWORTH "Kupferhaltige AlZnMg-Knetlegierungen - Eigenschaften und Entwicklungstendenzen" pages 724 to 733

MATERIALS SCIENCE AND ENGINEERINGS, Vol. 14, No. 1, April 1974 Lausanne E. Di RUSSO et al. "A New Thermo-mechanical Procedure for Improving the Ductility and Toughness of Al-Zn-Mg-Cu Alloys in the transverse Directions" pages 23 to 36

**Description**

This invention relates to a method for producing an aircraft stringer material.

Conventionally, AA7075 alloy is well known as a typical raw material for an aircraft stringer and has widespread use in the aircraft industry. Generally, the alloy is fabricated into the aircraft stringer by the following process.

That is, AA7075 alloy ingot is homogenized by heating at about 460°C for 16 to 24 hours and hot rolled at 400°C to provide a plate approximately 4 to 8 mm thick. This plate is then intermediately annealed at around 410°C for 1 hour, cooled at a cooling rate not exceeding 30°C/hr. and cold rolled to the plate of 2 to 4 mm in thickness. The cold rolled plate is annealed by heating to a temperature of 410°C for 8—12 hours, and holding the temperature for about one to two hours. Further, the annealed plate is cooled to a temperature of approximately 230°C at a cooling rate of 30°C/hr. or less, maintained at the temperature for 6 hours and air cooled to produce a primary stringer material.

Further the primary stringer material is subjected to a stepped cold working at various cold reductions ranging from 0 to 90%, and subsequently to a solution heat treatment, providing a secondary stringer material. The solution heat treatment may be carried out without the stepped cold working.

Generally, the aforesaid primary material is known as O-material, while the secondary material as W-material. Thus, hereinafter the former is referred to as "O-material" and the latter to as "W-material". W-material is formed into the desired shape, such as hat-shape, Z-shape or L-shape, by section roll forming and the thus treated W-material is subjected to a T6 temper treatment and, if required, further chemical milling to provide the aircraft stringer and stringer frame.

However, the conventional stringer materials have, for example, the following disadvantages:

The O-material produced from AA7075 alloy according to the above conventional method has a large grain size of 150—250 μm and if the O-material is subjected to only a relatively small degree of cold reduction, e.g. 10—30%, and then upon the solution heat treatment, its grain size further grows, resulting in a reduction of the mechanical properties and presenting many serious problems in the subsequent processes. Particularly, a cold reduction of 20% is known to cause marked grain growth.

Such considerable grain growth in the parts which are subjected to only a small degree of cold reduction, causes reductions in elongation and fracture toughness, and leads to an undesirable orange peel and occurrence of crack during section roll forming. Further, when material having a grain size exceeding 100 μm is subjected to a conventional chemical milling, which is practised in the production of the aircraft stringers, surface roughness increases remarkably and lowers fatique strength. Hence, in case of a small degree of cold reduction, production of stringers is not only very difficult, but also the properties of the product are not satisfactory. In the case where a relatively large degree of cold reduction (more than 50%) is followed by solution heat treatment, it is possible to make the grain size approximately 50 μm in the material. However, in practice, cold rolling reduction in a wide range of 0 to 90%, is conducted on an O-material of about 10 m in length so that it is extremely difficult to ensure that the grain size does not exceed 100 μm anywhere along its length.

Therefore, there is a need for an O-material which can develop a fine grain size (not exceeding 100 μm) in a W-material over the above wide range of cold reductions.

Still further, stringer material prepared from a conventional Al—Zn—Mg—Cu alloy, such as AA7075 alloy are generally inferior in corrosion-resistance, and thus a highly improved corrosion-resistance is desired.

A primary object of the present invention is to provide a method for producing an improved unclad or clad material useful for an aircraft stringer or stringer frame, wherein the above-mentioned disadvantages encountered in conventional practice are obviated or mitigated.

Another object of the present invention is to provide a light aircraft stringer or stringer frame having highly improved mechanical properties and corrosion-resistance.

In an aircraft stringer material produced according to the present invention, because the grain growth in O-material is occurring during solution treatment after cold working is very slight, even in the case where the degree of cold reduction is relatively small (e.g. approximately 30% reduction or less), stringer and stringer material (hereinafter, "stringer" and "stringer material" mean stringer or stringer frame, and stringer material or stringer frame material respectively, unless otherwise stated) having a grain size not exceeding 100 μm over the whole length thereof can be readily obtained after solution heat treatment. This imparts a high degree of workability strength and fracture toughness to the stringer material.

Unclad O- and W-materials produced according to the present invention have a grain size not exceeding 100 μm and are made of an aluminum base alloy consisting essentially of 5.1 to 8.1 wt.% Zn, 1.8 to 3.4 wt.% Mg, 1.2 to 2.6 wt.% Cu, up to 0.20 wt.% Ti, and at least one of 0.18 to 0.35 wt.% Cr and 0.05 to 0.24 wt.% Zr, the balance being aluminum and incidental impurities.

In order to produce the O-material, the above aluminum base alloy can be homogenized, hot rolled and cold rolled to a given thickness as in the above-described conventional method. The cold rolled alloy is then annealed by rapid heating to a temperature of 320°C to 500°C at a heating rate of more than 11°C/min. and then cooling. In this annealing step, if the cooling is performed at a cooling rate of 30°C/hr and upward, the material may be further reheated to 200°C to 500°C and cooled in the following manner. In the case where the reheating temperature is 200°C to less than 350°C, cooling is performed at a cooling rate of 30°C/hr and less, or by air-cooling. In the case where the reheating temperature is 350°C to 500°C, cooling is performed at a rate not exceeding 30°C/hr. Such a reheating procedure is particularly effective in making the O-material highly workable.

The thus obtain O-material can be subjected to a stepped cold working at 0 to 90% cold reduction in thickness without lowering mechanical properties and a W-material having a fine grain size not exceeding 100 μm can be obtained from this O-material after solution heat treatment.

A clad stringer material further having excellent corrosion-resistance in addition to the above advantages can be also prepared in a process similar to the above-described process using the above specified aluminum base alloy as a core material and AA7072 alloy as the cladding material. In clad O- and W-materials, the grain size throughout the core material does not exceed 100 μm. AA7072 alloy has a high corrosion-resistance and serves to prevent the core alloy material from corrosion, resulting in an aircraft stringer having remarkably improved corrosion-resistance. In order to produce the clad material, AA7072 alloy may be clad onto the one or both sides of the above aluminum alloy core layer in the way described hereinafter at the hot rolling step and the production proceeds as with unclad material described above to provide clad O-materials and further W-materials. The resultant clad O- and W-materials have an extremely high degree of corrosion-resistance, since the cladding layer of 7072 alloy serves as a protective layer and prevents corrosion of the core material layer.

The above unclad and clad materials can also receive a normal chemical milling without reduction of fatigue strength.

Figure 1 is a perspective view of part of the inside of an aircraft body;

Figures 2, 3 and 4 are views of various aircraft stringer cross sectional shapes;

Figure 5 is a perspective view of a stringer material having portions thereof subjected to different degrees of cold working;

Figure 6 is an enlarged schematic view illustrating the relationship between the degree of cold working and the grain size after solution treatment for a conventional stringer material;

Figure 7 is a graph showing the relationship between tensile strength of unclad O-material or grain size of unclad W-material and reheating temperature;

Figure 8 is a graph showing the relationship between tensile strength of clad O-material or grain size of core of clad W-material and reheating temperature.

In practising the present invention, the composition limits of the aluminum base alloy described hereinabove must be closely followed in order to achieve the objects contemplated by the invention. The reasons for the limitation of each component of the alloy according to the present invention is as follows;

Zn: When its content is less than 5.1 wt.% strength of material (hereinafter referred to as "T6-material") after T6 type heat treatment does not reach the required level. On the other hand, when the content exceeds 8.1 wt.%, the fracture toughness of the T6-material decreases and stress corrosion cracking is apt to occur.

Mg: If the content is less than 1.8 wt.%, the strength of the T6-material after the T6 type heat treatment is low, and, if the content exceeds 3.4 wt.%, cold-workability of the annealed material does not reach the required level. Further the fracture toughness of T6-material decreases.

Cu: A content of less than 1.2 wt.% lowers the strength of the T6-material whilst a content of more than 2.6 wt.% lowers the fracture toughness of the T6-material.

Ti: Addition of 0.20 wt.% and less of Ti is effective to prevent crack of the ingot during grain refinement of the cast structure. However, addition of more than 0.20 wt.% leads to the formation of giant intermetallic compounds.

Cr: A content of less than 0.18 wt.% may lead to stress corrosion cracking. A content of more than 0.35 wt.% leads to formation of giant intermetallic compounds to a decrease in the fracture toughness of the T6-material.

Zr: An amount of 0.05 to 0.25 wt.% serves effectively to prevent stress corrosion cracking and refines the grain. If the content is less than 0.05 wt.%, the above effect is insufficient and if it exceeds 0.25 wt.%, giant intermetallic compounds are formed. Formation of giant intermetallic compounds should be avoided.

As incidental impurities, Fe, Si and Mn are most preferably restricted as follows:

Fe: This component has effect on the grain refinement, but if its content exceeds 0.50 wt.%, the amount of insoluble compounds increases in the alloy, lowering the fracture toughness of the T6-material.

Si: This component exhibits effect on grain refinement. The content of more than 0.40 wt.% increases the amount of insoluble compounds in the alloy, leading to lowering of the fracture toughness of the T6-material.

Mn: This imparts high resistance to stress corrosion crack to the material. If its content exceeds 0.70 wt.%, sufficient quench sensitivity and fracture toughness may not be attained.

In order to prepare unclad aircraft stringer materials, such as unclad O-material and W-material, using the aluminum alloy according to the present invention, the alloy ingot is homogenized, preferably at a temperature of 400 to 490°C for 2 to 48 hours, so that main additional elements like Sn, Mg and Cu may fully dissolve and, at the same time, Cr and Zr may precipitate as a fine intermetallic compound. If homogenization is insufficient owing to inadequate heating temperature or insufficient heating time, hot-workability of the aluminum base alloy ingot and resistance to stress corrosion crack will decrease and further grain growth will occur. On the contrary, when the heating temperature for homogenizing

4

treatment exceeds 490°C, eutectic melting occurs. Hence, the heating temperature for homogenizing is preferably limited to a temperature not exceeding 490°C.

Hot rolling after homogenizing treatment is preferably initiated from a starting temperature of 350 to 470°C. A starting temperature of less than 350°C makes deformation resistance of the material high and hot rolling is very difficult, while a starting temperature or more than 470°C reduces hot-workability of the alloy. Thus, it is preferable for the initial temperature to be within the above range.

Following the above hot rolling, annealing treatment may, if desired, be performed. This treatment is performed by holding the hot rolled material at a temperature of 300 to 460°C and then cooling to a temperature of approximately 260°C at a cooling rate not exceeding 30°C/hr. This annealing step is particularly needed when degree of the cold rolling reduction in the subsequent cold working is high.

The cold rolling reduction in cold rolling operation is desirably at least 20% because, when the rolling reduction is lower, the grain size of the resultant stringer O-material and W-material may grow to more than 100 μm.

Cold rolled material is further subjected to annealing characterised by rapid heating to a temperature of from 320°C to 500°C at a heating rate of more than 11°C/min. and this process is especially useful in producing a high quality and coil-formed stringer material.

Conventional annealing of aluminum base alloy, such as AA7075 alloy, has been accomplished by heating to a temperature of 413 to 454°C, holding at this temperature for two hours, air cooling, reheating to a temperature of 232°C, holding at the temperature for six hours and finally cooling to a room temperature. This annealing procedure is proposed in MIL Specification H6088E item 5.2.7.2 and has been well known as the most normal annealing method for the 7075 alloy in the aircraft field. Thus, the above annealing process according to the present invention will be found to exceed the above common knowledge.

If the heating temperature exceeds 500°C, the material melts, and marked grain growth occurs. On the other hand, when the heating temperature is below 320°C, annealing and recrystallization of the material are insufficient. In producing the aircraft stringer, since such phenomena cause crack on the stepped cold working or taper rolling work, such phenomena should be avoided. It was found that only the above heating temperature range of 320 to 500°C enables the production of stringer material having fine grain size not exceeding 100 μm.

With regard to a heating rate to the above high temperature of 320°C to 500°C, when rapidly heating at a heating rate of more than 11°C/min., precipitation of Mg—Zn type compounds on this rapid heating is very slight and dislocation structure introduced by the cold rolling will be changed to uniformly fine cell structure by the above annealing treatment including rapid heating step. When the thus-obtained O-material is subjected to stepped cold working or taper rolling working to a comparatively small rolling degree of reduction (10 to 30%) and then to the solution heat treatment, such cell structure serves as a nucleation site of recrystallization and develops a uniformly fine recrystallized grain structure. On the contrary, if, in annealing process the heating rate is 11°C/min. or less, Mg—Zn type compounds precipitate unevenly during heating to a given annealing temperature, and the dislocation structure formed during the preceding cold rolling step will disappear completely, or a coarse and non-uniform cell structure will remain. If the thus-annealed material is cold worked only to a comparatively small degree (10 to 30%) of reduction and then the solution heat treated, the recrystallized grain becomes coarse so that a uniform and fine recrystallized grain structure cannot be obtained.

Referring to the cooling rate after the above rapid heating, a cooling rate of below 30°C/hr. can achieve a complete O-material and impart a high degree of cold workability. Thus, such cooling enables a wide range of taper rolling reduction (up to 90%) at one time.

On the other hand, if the cooling rate is 30°C/hr. or more, the material is hardened, that is, age-hardened, and so an O-material having higher strength relative to that of usual O-material is produced. Thus, such rapid cooling does not matter when O-materials are applied to stringer materials which are cold worked to a comparatively small degree of reduction. However, rapid cooling is undesirable for O-material which is subjected to a large amount of cold reduction. For this, further study was conducted and the following thermal treatment was found to overcome the above problem.

In practising annealing, when the cooling rate is 30°C/hr. or more, the annealing process is performed by a two stage thermal treatment. The first stage thermal treatment is performed by rapid heating the cold rolled material is of 320 to 500°C at a rate exceeding 11°C/min., as described above, and cooling at a rate of 30°C/hr. or more. Following the first stage thermal treatment, the material is subjected to the second stage thermal treatment.

The second stage thermal treatment is performed by reheating to a temperature within the range of 200 to 500°C and subsequently cooling as specified below. When the reheating temperature is 200°C to less than 350°C, cooling is achieved by cooling at a rate not exceeding 30°C/hr. or by air cooling so that the material may not again age-harden. When the reheating temperature is 350°C and 500°C, cooling rate should not exceed 30°C/hr. By adding the above reheating step to the first rapid heating step, high workability can be attained, even if the cooling rate after the first rapid heating is 30°C/hr. or more.

By using the above composition and process, unclad O-material having a very high degree of workability can be readily obtained and unclad W-material in which the grain size does not exceed 100 μm over the whole length thereof can be prepared from this unclad O-material after the solution heat treatment regardless of degree of cold reduction of the stepped cold working. A grain size not exceeding 100 μm

eliminates orange peel and crack during section roll forming and make possible improved stringer having superior mechanical properties, such as elongation, fracture toughness and excellent chemical milling capability.

In a further embodiment of the present invention, the clad aircraft stringer materials are made of a core material of the above aluminum base alloy consisting essentially of 5.1 to 8.1 wt.% Zn, 1.8 to 3.4 wt.% Mg, 1.2 to 2.6 wt.% Cu, up to 0.20 wt.% Ti and at least one of 0.18 to 0.35 wt.% Cr and 0.05 to 0.25 wt.% Zr, the balance being aluminum and impurities with the above specified limits on the Fe, Si and Mn contents, and a cladding material of AA7072 alloy in the way similar to that described for the unclad material.

The cladding raw material of AA7072 alloy ingot is preferably homogenized at a temperature of 400 to 560°C for 2 to 48 hours so that the major alloying elements, such as Zn, may sufficiently dissolve in the alloy to provide a uniform solid solution and thereafter the treated ingot is rolled to a desired thickness.

Prior to cladding, the cladding material and the core material which has been homogenized in the same manner as in case of unclad materials are decreased. The decreased cladding material is bonded to at least one side of the decreasing core material by welding and hot rolled. A preferred clad rate is 0.05 to 10% (clad rate is the ratio of the thickness of the cladding on one side to the total thickness of the cladding and core, expressed as a percentage).

Clad rates below 0.05% renders hot clad-rolling difficult and the cladding layer is liable to be damaged. Further, satisfactory corrosion-resistance cannot be achieved. On the other hand, clad rates exceeding 10% are liable to lower the strength of clad composite material after heat treatment and presents problems.

Following the above hot clad-rolling, the clad composite is cold rolled, annealed and further stepped cold worked in the same way as with the unclad material to provide the clad O-material and W-material in which grain sizes of cores do not exceed 100 μm. Thus produced clad stringer materials attain a highly improved corrosion-resistance as well as advantages described for the unclad stringer materials.

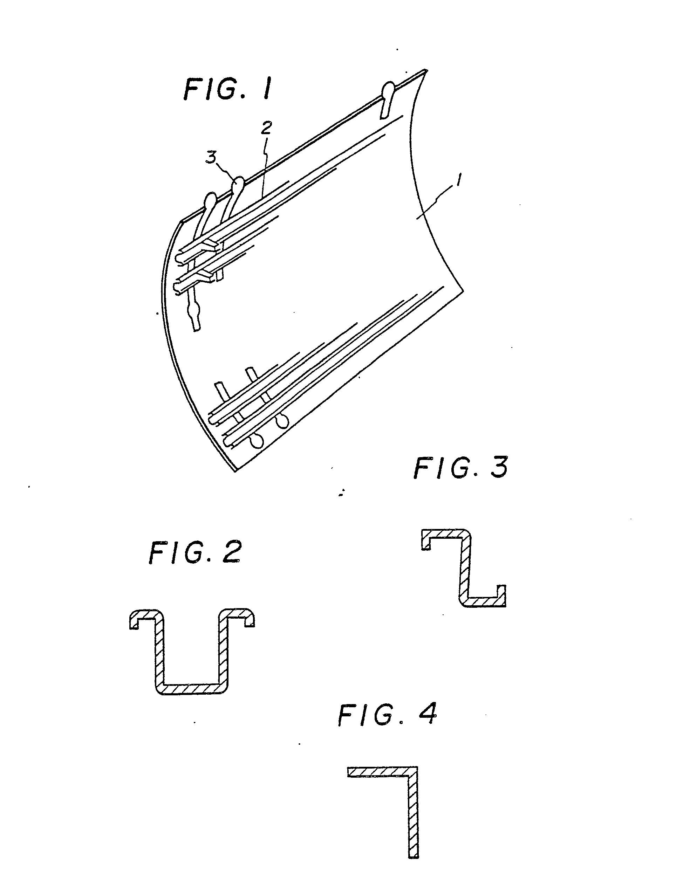

An aircraft stringer provide reinforcement and, as shown with reference numbers 2 and 3 in Figure 1, are used in the inside of an aircraft body 1. Figure 2, Figure 3 and Figure 4 are respectively cross-sectional views of various forms of stringers 2 used in the longitudinal direction and stringer frames 3 used in the circumferential direction of the aircraft body 1.

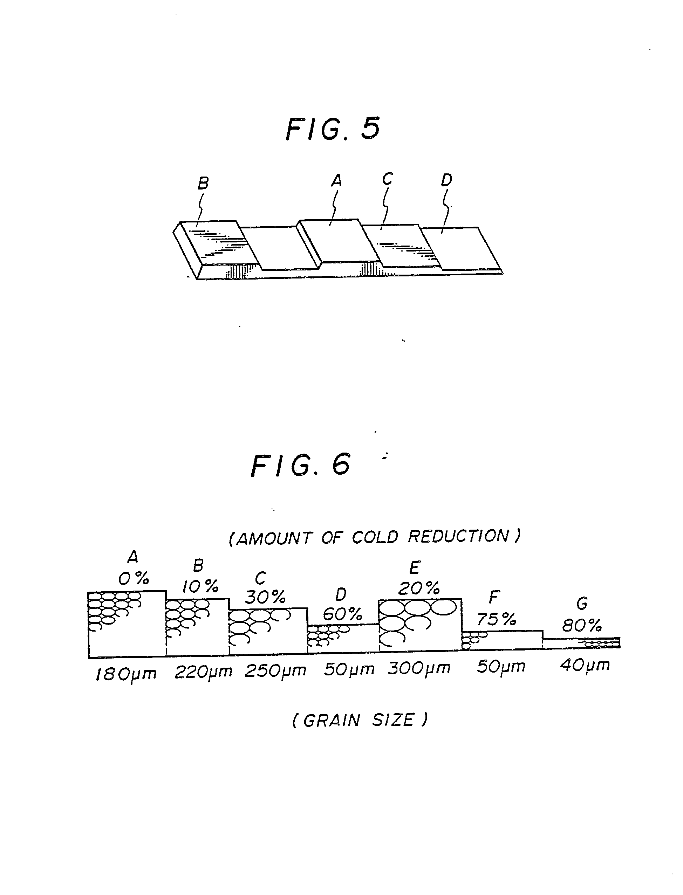

As shown in the respective Figures, Figure 2 shows an inverted top hat-shaped stringer cross-section, Figure 3 a substantially Z-shaped stringer cross-section and Figure 4 an L-shaped stringer cross-section. These stringers 2 and 3 are prepared by section roll forming W-material into the required cross-section and subsequently performing a T6 temper treatment. W-material used in production of the stringers is prepared by stepped cold working of the O-material in the longitudinal direction and solution heat treatment. In Figure 5, A shows a portion which has not been cold worked, and B, C and D show portions which have been cold worked to a relatively low degree, an intermediate degree and a relatively high degree, respectively.

Such stepped cold working is required in order to vary the thickness of each part according to the strength required in each part and reduce total weight of the aircraft.

As above-mentioned, the O-material according to the present invention can be transformed into the desired unclad W-material having a fine grain size not exceeding 100 μm, and the clad O-material can be transformed into a high corrosion-resistance W-material having a fine core grain size not exceeding 100 μm. However, conventional O-material cannot achieve the clad and unclad W-materials contemplated by the present invention. Figure 6 illustrates a relationship between the cold working reduction and grain size after solution heat treatment for a conventional W-material. As can be seen in Figure 6, in parts D, F and G which have been cold worked to a high degree of reduction, grain size is small. In parts A, B, C and E which have been cold worked to a small degree of reduction, grain size is extremely large.

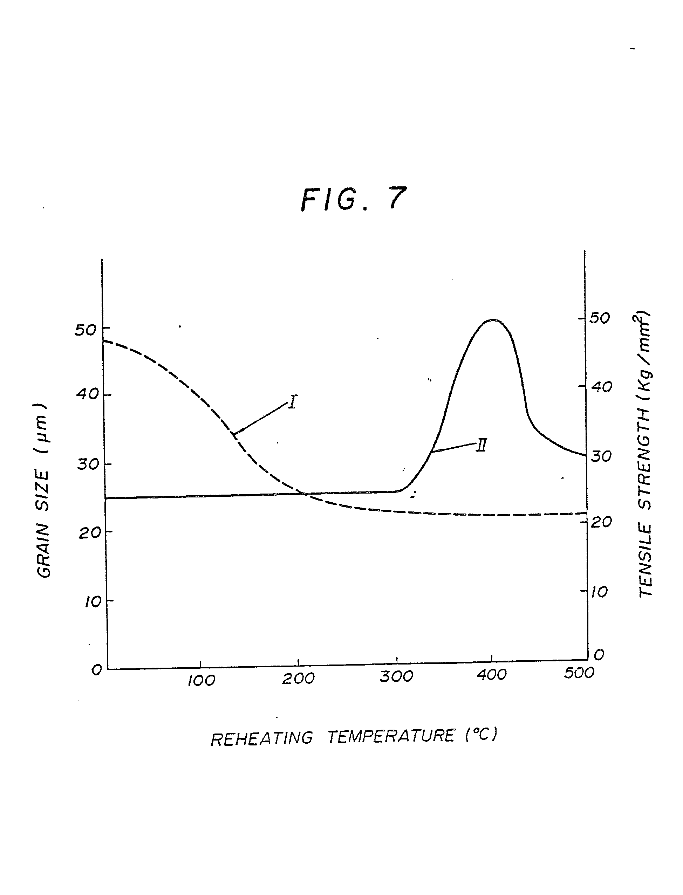

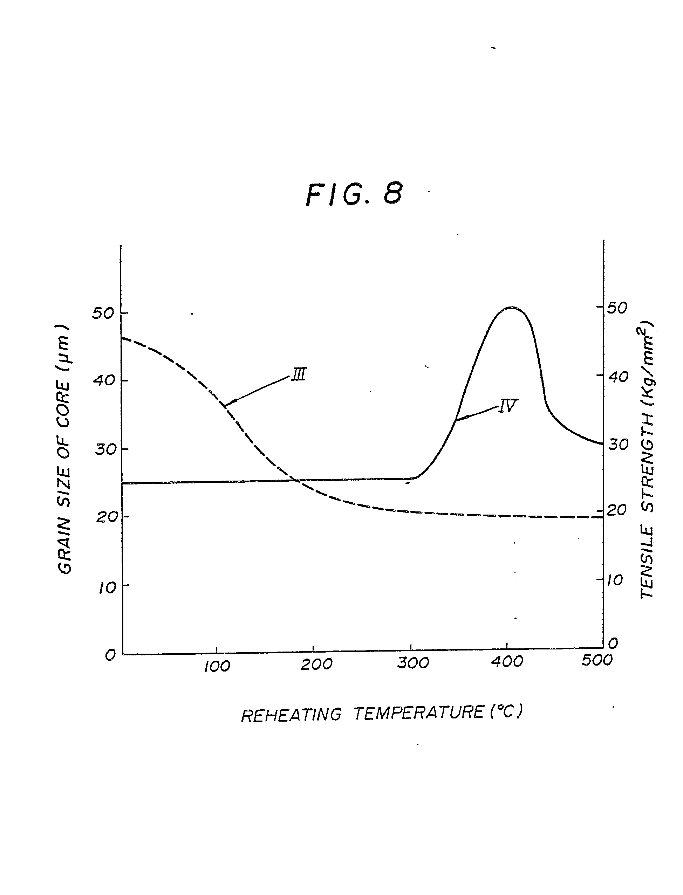

Experiments have proved that, when the above annealing process is performed by the two-stage thermal treatment, the reheating temperature in the second stage has a great effect on the tensile strength of unclad and clad O-material and on the grain sizes of unclad W-material and the core of the clad W-material receiving stepped cold working and solution heat treating. This effect is demonstrated in Figures 7 and 8 which are graphs plotting the tensile strengths (Curves I and III) of unclad and clad O-materials annealed by rapid heating and subsequently reheating to various temperatures and grain size (Curve II) of unclad W-material and grain size (Curve IV) of core of clad W-material obtained after cold working the respective O-materials to 20% cold reduction, solution heat treating at 470°C for 40 minutes and then water quenching versus reheating temperature in the annealing process. In this measurement, the first stage thermal treatment in annealing process was accomplished by rapid heating, air cooling and holding at room temperature. Thus, this treatment give a hardening effect to the material, increasing the tensile strength of the material thus treated. As can be seen from Figures 7 and 8, the increased tensile strength decreased with increase in reheating temperature. The grain size or core grain size of W-materials which received the above cold working to 20% reduction, solution heat treatment and water quenching were dependent on the reheating temperature. Reheating temperature of 200 to 350°C gave comparatively small grain size of 25—35 μm, reheating temperature of 350 to 440°C increased considerably grain size to the range of 35 and 50 μm and reheating temperature of 440 to 500°C again decreased grain size to the range of 30—35 μm.

In order to further understand the present invention and the advantages derived therefrom, the following examples are presented. In these examples, ingots of the aluminum base alloy having the compositions shown in the following Table 1 were used.

TABLE 1

| Alloy No. | Chemical Composition (wt. %) | | | | | | | | | |
|---|---|---|---|---|---|---|---|---|---|---|
| | Si | Fe | Cu | Mn | Mg | Cr | Zn | Ti | Zr | Al |
| 1 | 0.16 | 0.22 | 1.6 | 0.03 | 2.5 | 0.22 | 5.7 | 0.03 | — | Reminder |
| 2 | 0.09 | 0.18 | 1.7 | 0.01 | 2.4 | 0.24 | 5.8 | 0.04 | — | ,, |
| 3 | 0.14 | 0.25 | 1.8 | 0.03 | 2.4 | 0.20 | 5.8 | 0.02 | — | ,, |
| 4 | 0.10 | 0.18 | 1.7 | 0.02 | 2.2 | 0.25 | 7.0 | 0.05 | 0.10 | ,, |
| 5 | 0.16 | 0.24 | 2.2 | 0.01 | 2.8 | 0.20 | 6.8 | 0.04 | 0.09 | ,, |
| 6 | 0.11 | 0.19 | 1.8 | 0.01 | 2.4 | 0.21 | 5.9 | 0.04 | — | ,, |
| 7 | 0.11 | 0.22 | 1.0 | 0.02 | 1.5 | 0.19 | 4.5 | 0.03 | — | ,, |
| 8 | 0.13 | 0.20 | 2.9 | 0.03 | 3.5 | 0.23 | 8.5 | 0.04 | — | ,, |

Note: Nos. 1 — 6: Alloys according to the present invention.

Nos. 7 — 8: Alloys for comparison.

Example 1

O-materials 3 mm thick having grain size not exceeding 100 μm according to the present invention and O-materials 3 mm thick having grain size of more than 100 μm according to the conventional method were respectively prepared using ingots, 300 mm in thickness, of alloy Nos. 1 and 4 in the following procedures.

Procedure according to the present invention:

Homogenization treatment (at 460°C for 16 hours) → Hot rolling (from 300 mm to 6 mm in thickness at 400°C) → Cold rolling (from 6 mm to 3 mm in thickness) → Annealing (rapid heating to a temperature of 450°C at a heating rate of 215°C/min. and holding for 3 minutes at the temperature → cooling at a cooling rate of 5°C/min. → reheating at 300°C for 1 hour → cooling at 200°C at a cooling rate of 20°C/min.) → O-materials according to the present invention.

Procedure according to the conventional method:

Homogenization treatment (at 460°C for 16 hours) → Hot rolling (from 300 mm to 6 mm in thickness at 400°C) → Intermediate annealing (heating at 420°C for 1 hour → cooling at a rate of 30°C/hr.) → Cold rolling (from 6 mm to 3 mm in thickness) → Annealing (heating to 420°C at a rate of 0.5—1°C/min. and holding at 420°C for 2 hours → cooling at a rate of 25°C/hr. → heating at 235°C for 6 hours → air cooling) → O-materials according to the conventional method.

Example 2

Following the procedures described in Example 1, the respective O-materials were further treated to produce W-materials in the following procedures.

Procedure according to the present invention:

→ Cold working (cold reduction of 0—90%, as shown in Table 2) → Solution heat treatment (at 470°C for 40 minutes, using a salt bath) → Water quenching → W-materials according to the present invention.

Procedure according to the conventional method:

→ Cold working (cold reduction of 0—90%, as shown in Table 2) → Solution heat treatment (at 470°C for 40 minutes, using a salt bath) → Water quenching → W-materials according to the conventional method.

Properties of O-materials and W-materials prepared in Examples 1 and 2 were tested and are given in Table 2.

TABLE 2

| Alloy No. | Grain Size of O-Material (μm) | Cold Reduction (%) | Grain Size of W-Material (μm) | Result of Bending Test [1] | | Mechanical Properties of T6-Material | | | Fracture Toughness (MN. m-3/2) | Surface Roughness after Chemical Milling (μm) | Fatigue Strength after Chemical Milling (Kg/mm2) |
|---|---|---|---|---|---|---|---|---|---|---|---|
| | | | | External Appearance | Occurrence of Crack | Yield Strength (Kg/mm2) | Tensile Strength (Kg/mm2) | Elongation (%) | | | |
| 1 *2 | 30 | 0 | 30 | Good | None | 51.1 | 57.0 | 16 | 120 | 15 | 18 |
| | | 10 | 35 | ,, | ,, | 52.0 | 57.6 | 14 | 120 | 17 | 18 |
| | | 20 | 40 | ,, | ,, | 52.6 | 57.3 | 14 | 122 | 20 | 17 |
| | | 30 | 35 | ,, | ,, | 51.4 | 57.3 | 14 | 122 | 17 | 18 |
| | | 60 | 30 | ,, | ,, | 50.6 | 57.0 | 16 | 122 | 15 | 18 |
| | | 90 | 25 | ,, | ,, | 50.7 | 56.9 | 16 | 125 | 12 | 18 |
| 1 *3 | 200 | 0 | 200 | Orange peel | Considerable Crack | 50.0 | 56.3 | 10 | 88 | 100 | 7.6 |
| | | 10 | 220 | ,, | ,, | 51.0 | 56.9 | 9 | 80 | 110 | 7.2 |
| | | 20 | 280 | ,, | ,, | 51.2 | 56.7 | 8 | 80 | 140 | 7.0 |
| | | 30 | 190 | ,, | Slight Crack | 50.4 | 56.2 | 11 | 87 | 143 | 7.0 |
| | | 60 | 50 | Good | None | 49.7 | 56.5 | 14 | 114 | 25 | 16 |

TABLE 2 (Continued)

| Alloy No. | Grain Size of O-Material ($\mu$m) | Cold Reduction (%) | Grain Size of W-Material ($\mu$m) | Result of Bending Test [1] | | Mechanical Properties of T6-Material | | | Fracture Toughness (MN. m$^{-3/2}$) | Surface Roughness after Chemical Milling ($\mu$m) | Fatigue Strength after Chemical Milling (Kg/mm$^2$) |
|---|---|---|---|---|---|---|---|---|---|---|---|
| | | | | External Appearance | Occurrence of Crack | Yield Strength (Kg/mm$^2$) | Tensile Strength (Kg/mm$^2$) | Elongation (%) | | | |
| 4 [2] | 25 | 0 | 25 | Good | None | 53.1 | 60.0 | 17 | 115 | 12 | 18 |
| | | 10 | 30 | ,, | ,, | 54.0 | 60.6 | 15 | 115 | 15 | 18 |
| | | 20 | 35 | ,, | ,, | 54.6 | 60.3 | 14 | 117 | 17 | 18 |
| | | 30 | 35 | ,, | ,, | 53.4 | 60.3 | 15 | 117 | 17 | 18 |
| | | 60 | 25 | ,, | ,, | 52.6 | 60.0 | 16 | 117 | 17 | 18 |
| | | 90 | 25 | ,, | ,, | 52.7 | 60.3 | 16 | 120 | 12 | 18.2 |
| 4 [3] | 180 | 0 | 190 | Orange peel | Slight Crack | 52.2 | 59.3 | 10 | 84 | 95 | 8 |
| | | 10 | 210 | ,, | Considerable Crack | 52.9 | 60.0 | 10 | 79 | 100 | 7.8 |
| | | 20 | 250 | ,, | ,, | 53.2 | 59.7 | 9 | 79 | 126 | 7.4 |
| | | 30 | 180 | ,, | Slight Crack | 52.7 | 59.7 | 10 | 82 | 90 | 8.2 |
| | | 60 | 50 | Good | None | 52.0 | 59.5 | 14 | 110 | 25 | 15.6 |

Note: [1] Bending of 90°, Bending Radius = 1.5t (t = Thickness of Plate)
The test was carried out after 4 hours since the water quenching.

[2] Present Invention.

[3] Conventional Method.

In comparing the present invention and the conventional method, it becomes clear from the Table 2 that grain size of O-material according to the present invention is very fine and can provide W-material having fine grain size below 100 μm over the wide range of cold reduction, that is, 0—90%. Such effects eliminated orange peel and occurrence of crack during section roll forming and markedly improved bending property.

Further, W-materials were subject to T6 type treatment to produce T6-materials and the mechanical properties were examined. From Table 2, T6-materials of the present invention proved to be superior to those of the conventional method.

Still further, the respective T6-materials were chemical milled to 20% reduction in thickness in 10% NaOH aqueous solution and surface roughness was measured. After chemical milling fatigue test was carried out on each T6-material and the result is summarized in Table 2. As can be seen from Table 2, T6-materials according to the present invention are superior to those of the conventional method in surface roughness and fatigue strength owing to fine grain size.

## EFFECT OF HEATING RATE
### Example 3

Ingots 350 mm thick of alloy No. 1 were homogenized at 470°C for 24 hours, hot rolled between a starting temperature of 440°C and a final temperature of 340°C to provide plates 6 mm thick. Subsequently, the hot rolled plates were cold rolled to provide plates 3 mm thick, and received following annealing treatment to provide O-materials 3 mm thick. Annealing was accomplished by heating to a temperature of 450°C at various heating rates shown in Table 3, holding at the temperature for three minutes and cooling at a cooling rate of 25°C/hr.

### Example 4

The O-materials obtained in Example 3 were further cold worked to various cold reductions shown in Table 3, solution heat treated at 470°C for 40 minutes using the salt bath and water quenched to provide W-materials.

Relation between grain sizes of O- and W-materials and heating rate in annealing step is given in Table 3.

### TABLE 3

| Heating Rate to 450°C (°C/min) \ Cold Reduction (%) | Grain Size of W-Material (μm) | | | | | Grain Size of O-Material (μm) |
|---|---|---|---|---|---|---|
| | 0 | 10 | 20 | 30 | 60 | |
| 1200 | 30 | 30 | 33 | 30 | 25 | 30 |
| 400 | 30 | 30 | 35 | 30 | 28 | 30 |
| 86 | 30 | 30 | 35 | 35 | 30 | 30 |
| 43 | 30 | 35 | 40 | 40 | 30 | 30 |
| 21 | 35 | 35 | 45 | 40 | 30 | 35 |
| 14 | 75 | 85 | 85 | 75 | 35 | 75 |
| 11* | 110 | 130 | 180 | 160 | 40 | 110 |
| 7* | 120 | 150 | 200 | 170 | 45 | 110 |
| 2.4* | 200 | 230 | 280 | 220 | 45 | 180 |
| 0.9* | 200 | 240 | 300 | 210 | 45 | 180 |

Note: *Heating rate according to the conventional practice.

As can be seen from Table 3, when heating rate to 450°C exceeds 11°C/min., grain sizes of O-material and W-material are less than 100 μm and fine. On the contrary, when heating rate is 11°C/min. or less marked grain growth occurres.

The O-materials which were heated to 450°C at rates of 86°C/min., 21°C/min, 14°C/min., 11°C/min. and 0.9°C/min in annealing step were further tested. The respective O-materials were cold worked to cold reduction of 0 to 80%, which is practiced in usual production of aircraft stringer, solution heat treated at 470°C for 40 minutes using the salt bath and water quenched to produce W-materials.

Following water quenching, the respective W-materials were aged at 120°C for 24 hours to provide T6-materials. Properties of the W-materials and the T6-materials are given in Table 4. It will be clear from this Table that heating rate exceeding 11°C/min. is extremely effective to produce desired stringer materials.

TABLE 4

| Average Heating Rate (°C/min) | Cold Reduction (%) | Grain Size of W-Material (µm) | Result of Bending Test of W-Material* | | Mechanical Properties of T6-Material | | |
|---|---|---|---|---|---|---|---|
| | | | External Appearance | Occurrence of Crack | Yield Strength (Kg/mm²) | Tensile Strength (Kg/mm²) | Elongation (%) |
| 86 | 0 | 30 | Good | None | 51.0 | 57.1 | 16 |
| | 10 | 30 | ,, | ,, | 52.0 | 57.6 | 13 |
| | 20 | 35 | ,, | ,, | 52.4 | 57.9 | 13 |
| | 33 | 35 | ,, | ,, | 50.8 | 56.8 | 16 |
| | 50 | 30 | ,, | ,, | 50.4 | 57.3 | 16 |
| | 80 | 25 | ,, | ,, | 50.2 | 57.7 | 16 |
| 21 | 0 | 35 | Good | None | 51.0 | 57.0 | 15 |
| | 10 | 35 | ,, | ,, | 52.6 | 57.3 | 12 |
| | 20 | 45 | ,, | ,, | 53.0 | 57.0 | 13 |
| | 33 | 40 | ,, | ,, | 50.9 | 56.8 | 15 |
| | 50 | 30 | ,, | ,, | 49.9 | 57.6 | 17 |
| | 80 | 30 | ,, | ,, | 50.3 | 57.3 | 16 |

TABLE 4 (Continued)

| Average Heating Rate (°C/min) | Cold Reduction (%) | Grain Size of W-Material ($\mu$m) | Result of Bending Test of W-Material* | | Mechanical Properties of T6-Material | | |
| --- | --- | --- | --- | --- | --- | --- | --- |
| | | | External Appearance | Occurrence of Crack | Yield Strength (Kg/mm$^2$) | Tensile Strength (Kg/mm$^2$) | Elongation (%) |
| 14 | 0 | 75 | Good | None | 50.9 | 56.9 | 15 |
| | 10 | 85 | ,, | ,, | 52.0 | 57.0 | 13 |
| | 20 | 85 | ,, | ,, | 52.5 | 56.9 | 12 |
| | 33 | 75 | ,, | ,, | 50.6 | 56.6 | 15 |
| | 50 | 35 | ,, | ,, | 50.0 | 57.8 | 16 |
| | 80 | .35 | ,, | ,, | 50.1 | 57.4 | 16 |
| 11 | 0 | 110 | Orange peel | Slight Crack | 50.3 | 56.5 | 14 |
| | 10 | 130 | ,, | ,, | 51.6 | 56.8 | 13 |
| | 20 | 180 | ,, | ,, | 51.5 | 57.0 | 13 |
| | 33 | 160 | ,, | ,, | 50.7 | 56.7 | 13 |
| | 50 | 40 | Good | None | 50.3 | 56.5 | 15 |
| | 80 | 40 | ,, | ,, | 50.0 | 56.0 | 15 |

TABLE 4 (Continued)

| Average Heating Rate (°C/min) | Cold Reduction (%) | Grain Size of W-Material (μm) | Result of Bending Test of W-Material* | | Mechanical Properties of T6-Material | | |
|---|---|---|---|---|---|---|---|
| | | | External Appearance | Occurrence of Crack | Yield Strength (Kg/mm$^2$) | Tensile Strength (Kg/mm$^2$) | Elongation (%) |
| 0.9 | 0 | 200 | Orange peel | Considerable Crack | 50.0 | 56.5 | 10 |
| | 10 | 240 | ,, | ,, | 51.1 | 57.0 | 9 |
| | 20 | 300 | ,, | ,, | 51.2 | 56.8 | 9 |
| | 33 | 210 | ,, | ,, | 50.8 | 56.8 | 10 |
| | 50 | 45 | Good | None | 50.0 | 56.9 | 10 |
| | 80 | 40 | ,, | ,, | 49.8 | 56.0 | 10 |

Note: * 90° Bending, Bending Radius = 1.5t (t = Thickness of Plate)

The Test was carried out after 4 hours from water quenching.

0 030 070

# 0 030 070

EFFECT OF HEATING TEMPERATURE

### Example 5

Cold rolled plates 3 mm thick were prepared using ingots of alloy No. 2 in the same procedure as in case of Example 3. Following cold rolling, the plates were subjected to following two stage annealing treatment. In the first stage, the plates were heated to various heating temperatures of 320 to 520°C at various rates, shown in Table 5, held at the temperature for times shown in the same Table and cooled at a rate of 5°C/min. After the first heating treatment, the plates were reheated at 300°C for one hour and cooled at a rate of 20°C/hr., providing O-materials 3 mm thick.

### Example 6

The O-materials obtained in Example 5 were cold worked to various cold reductions, solution heat treated at 470°C for 40 minutes using the salt bath and water quenched providing W-materials.

Relation between grain sizes of O-materials and W-materials and the first stage heating temperature is given in Table 5. It can be seen from the above Table 5 that only O-material which has received annealing treatment characterized by rapid heating to 320 to 500°C can be converted to W-material having fine grain size even after cold working to the small amount of cold reduction and subsequent solution heat treatment. If heating temperature is beyond the above range, W-material of fine grain size can not be obtained after cold heat treatment. That is, grain size of W-material becomes larger than 100 μm.

TABLE 5

| Average Heating Rate (°C/min) | Heating Temperature (°C) | Holding Time (min.) | Grain Size of W-Material (μm) | | | | | | Grain Size of O-Material (μm) |
|---|---|---|---|---|---|---|---|---|---|
| | | | Cold Reduction (%) | | | | | | |
| | | | 0 | 10 | 20 | 30 | 60 | 80 | |
| 230 | 480 | 1 | 30 | 30 | 35 | 35 | 30 | 25 | 30 |
| 220 | 460 | 3 | 30 | 30 | 35 | 35 | 30 | 25 | 30 |
| 205 | 430 | 5 | 30 | 35 | 35 | 35 | 30 | 30 | 30 |
| 198 | 415 | 12 | 35 | 40 | 40 | 40 | 35 | 30 | 35 |
| 188 | 395 | 10 | 40 | 40 | 45 | 45 | 35 | 30 | 40 |
| 175 | 370 | 20 | 40 | 45 | 55 | 50 | 35 | 30 | 40 |
| 150 | 320 | 60 | 40 | 50 | 60 | 60 | 35 | 35 | 40 |
| 250 | 520* | 2 | 100 | 120 | 150 | 130 | 50 | 40 | 90 |

Note: *Eutectic melting occurred.

Three O-materials selected from the O-materials of Example 5 were further examined. The three O-material were cold worked up to maximum reduction of 80%, solution heat treated at 470°C for 40 minutes using the salt bath and water quenched to provide W-materials. W-materials were further aged at 122°C for 25 hours to produce T6-materials. Properties of the above W-materials and T6-materials are shown in Table 6. From this table it is apparent that all materials have sufficient properties as stringer material.

TABLE 6

| Average Heating Rate (°C/min) | Heating Temperature (°C) | Cold Reduction (%) | Grain Size of W–Material ($\mu$m) | Result of Bending Test of W–Material* | | Mechanical Properties of T6–Material | | |
|---|---|---|---|---|---|---|---|---|
| | | | | External Appearance | Occurrence of Crack | Yield Strength (Kg/mm$^2$) | Tensile Strength (Kg/mm$^2$) | Elongation (%) |
| 230 | 480 | 0 | 30 | Good | None | 51.3 | 57.0 | 16 |
| | | 10 | 30 | ,, | ,, | 52.3 | 57.8 | 14 |
| | | 20 | 35 | ,, | ,, | 52.8 | 56.9 | 14 |
| | | 30 | 35 | ,, | ,, | 51.6 | 57.3 | 16 |
| | | 60 | 30 | ,, | ,, | 50.3 | 57.0 | 17 |
| | | 80 | 25 | ,, | ,, | 50.6 | 57.1 | 17 |
| 205 | 430 | 0 | 30 | ,, | ,, | 51.2 | 56.9 | 15 |
| | | 11 | 35 | ,, | ,, | 53.0 | 57.3 | 13 |
| | | 20 | 35 | ,, | ,, | 52.9 | 57.3 | 14 |
| | | 28 | 33 | ,, | ,, | 50.8 | 57.0 | 16 |
| | | 53 | 30 | ,, | ,, | 49.8 | 56.9 | 15 |
| | | 75 | 30 | ,, | ,, | 50.3 | 57.2 | 15 |
| 188 | 395 | 0 | 40 | ,, | ,, | 52.0 | 57.3 | 16 |
| | | 9 | 40 | ,, | ,, | 53.1 | 57.9 | 14 |
| | | 22 | 45 | ,, | ,, | 52.8 | 57.6 | 13 |
| | | 30 | 45 | ,, | ,, | 50.6 | 57.6 | 16 |
| | | 45 | 35 | ,, | ,, | 50.1 | 57.0 | 17 |
| | | 80 | 30 | ,, | ,, | 50.7 | 57.0 | 17 |

Note: *90° Bending, Bending Radius = 1.5t (t = Thickness of Plate).
The test was carried out after 4 hours from water quenching.

0 030 070

# 0 030 070

EFFECT OF HOLDING TIME AT HEATING TEMPERATURE

Example 7

Cold rolled plates 3 mm thick were prepared from ingots of alloy No. 3 according to the practice described in Example 3. The plates were heated to temperatures of 480°C to 385°C at respective rates shown in Table 7, held at the heating temperature for various times and cooled at a rate of 5°C/min. Following cooling the plates were reheated at 300°C for one hour and air cooled to produce O-material plates 3 mm thick.

Example 8

The O-materials produced in Example 7 were cold worked to 20% cold reduction which causes the marked grain growth, solution heat treated at 470°C for 40 minutes using the salt bath and water quenched to provide W-materials.

Relation between grain sizes of materials and rapid heating condition is shown in Table 7.

TABLE 7

| Average Heating Rate (°C/min) | Heating Temperature (°C) | Holding Time | Grain Size of W—Material ($\mu$m) | Grain Size of O—Material ($\mu$m) |
|---|---|---|---|---|
| 230 | 480 | 20 sec. | 30 | 30 |
| | | 1 min. | 35 | 30 |
| | | 5 ,, | 35 | 30 |
| | | 20 ,, | 40 | 35 |
| | | 40 ,, | 45 | 35 |
| 218 | 455 | 30 sec. | 25 | 25 |
| | | 2 min. | 30 | 30 |
| | | 10 ,, | 35 | 30 |
| | | 30 ,, | 40 | 35 |
| | | 50 ,, | 55 | 45 |
| 195 | 410 | 5 min. | 35 | 30 |
| | | 10 ,, | 35 | 30 |
| | | 35 ,, | 40 | 35 |
| | | 60 ,, | 55 | 45 |
| 183 | 385 | 10 min. | 35 | 30 |
| | | 25 ,, | 45 | 35 |
| | | 40 ,, | 55 | 45 |
| | | 60 ,, | 65 | 50 |

From Table 7 it is shown that very fine grain sizes are achieved in both the O- and W-materials over various holding times.

Further the O-materials in Example 7 were cold worked to cold reduction of 0 to 90%, solution heat treated at 470°C for 40 minutes using the salt bath and water quenched. Thus obtained W-materials were

17

less than 100 μm in grain size. Bending test (bending angle 90°, bending radius = 1.5t, t = thickness of plate) was carried out on the W-material after 4 hours since water quenching. As a result of bending test, crack and orange peel were not observed. The W-materials proved to be excellent as aircraft stringer material.

### EFFECT OF PRODUCTION CONDITION
#### Example 9

O-materials of 2 to 5 mm in thickness were prepared from 400 mm thick ingots of alloy No. 1 shown in Table 1 under the conditions shown in Table 8.

TABLE 8

| No. | Homogenization | Hot Rolling Conditions | | | Intermediate Annealing* | Cold Rolling Conditions | | Annealing | | | |
| | | Init. Temp. (°C) | Final Temp. (°C) | Thickness of Plate (mm) | | Cold Reduction (%) | Thickness of Plate (mm) | Rapid Heating Conditions | | | |
| | | | | | | | | Av. Heating Rate (°C/min) | Heating** | Cooling Rate | Reheating*** |
|---|---|---|---|---|---|---|---|---|---|---|---|
| 1 | 470°C × 24 hr. | 430 | 330 | 6 | not done | 33 | 4 | 140 | 450°C × 1 min. | 5°C/min. | 300°C × 1 hr. |
| 2 | 470°C × 24 hr. | 400 | 300 | 6 | 370°C × 1 hr. | 33 | 4 | 21 | 450°C × 2 min. | 5°C/min. | 300°C × 1 hr. |
| 3 | 465°C × 16 hr. | 425 | 310 | 6 | not done | 50 | 3 | 225 | 470°C × 3 min. | 5°C /min. | 300°C × 1 hr. |
| 4 | 475°C × 16 hr. | 425 | 310 | 6 | 390°C × 1 hr. | 50 | 3 | 17 | 480°C × 30 min. | 5°C/min. | 300°C × 1 hr. |
| 5 | 475°C × 16 hr. | 425 | 310 | 6 | 400°C × 1 hr. | 66 | 2 | 450 | 470°C × 2 min. | 10°C/min. | 470°C × 1 hr. |
| 6 | 475°C × 16 hr. | 425 | 310 | 6 | 400°C × 1 hr. | 66 | 2 | 38 | 400°C × 35 min. | 10°C/min. | 470°C × 1 hr. |
| 7 | 470°C × 16 hr. | 440 | 280 | 8 | not done | 50 | 4 | 230 | 480°C × 1 min. | 10°C/min. | 470°C × 1 hr. |
| 8 | 470°C × 16 hr. | 400 | 260 | 8 | ,, | 50 | 4 | 24 | 380°C × 40 min. | 10°C/min. | 470°C × 1 hr. |
| 9 | 470°C × 16 hr. | 440 | 380 | 5 | ,, | 40 | 3 | 57 | 430°C × 20 min. | 20°C/hr. | not done |
| 10 | 470°C × 16 hr. | 440 | 360 | 5 | ,, | 40 | 3 | 140 | 455°C × 2 min. | 20°C/hr. | ,, |
| 11 | 470°C × 12 hr. | 435 | 325 | 5 | ,, | 50 | 2.5 | 1300 | 470°C × 3 min. | 20°C/hr. | ,, |
| 12 | 475°C × 24 hr. | 415 | 345 | 5 | 350°C × 1 hr. | 50 | 2.5 | 38 | 400°C × 50 min. | 25°C/hr. | ,, |
| 13 | 475°C × 24 hr. | 415 | 290 | 9 | 400°C × 1 hr. | 66 | 3 | 900 | 460°C × 4 min. | 25°C/hr. | ,, |
| 14 | 475°C × 24 hr. | 415 | 320 | 8 | 400°C × 1 hr. | 75 | 2 | 440 | 460°C × 15 min. | 25°C/hr. | ,, |
| 15 | 470°C × 16 hr. | 420 | 320 | 10 | not done | 50 | 5 | 680 | 470°C × 3 min. | 25°C/hr. | ,, |
| 16 | 470°C × 16 hr. | 420 | 335 | 8 | 400°C × 1 hr. | 63 | 5 | 140 | 440°C × 10 min. | 25°C/hr. | ,, |
| 17 | 470°C × 16 hr. | 420 | 335 | 15 | 400°C × 1 hr. | 80 | 3 | 215 | 450°C × 2 min. | 30°C/hr. | ,, |

Note:    * Cooling rate after heating : 25°C/hr.

     ** First stage heating temperature × Holding time.

     *** Second stage heating temperature × Holding time.    Cooling rate after reheating is 25°C/hr.

Example 10

O-materials produced under the conditions of Nos. 1 to 17 shown in Table 8 were further cold worked to 20% cold reduction, solution heat treated at 470°C for 40 minutes using the salt bath and water quenched to provide W-materials.

Table 9 shows properties of the O-materials and W-materials. The W-materials obtained in Example 10 were aged at 120°C for 24 hours to provide T6-materials. Properties of T6-materials are given in Table 9.

TABLE 9

| No. | Grain Size of O-Material (μm) | Result of Bending Test of W—Material* | | Grain Size of W-Material (μm) | Mechanical Properties of T6—Materials | | |
|-----|------|------|------|------|------|------|------|
| | | External Appearance | Occurrence of Crack | | Yield Strength (Kg/mm2) | Tensile Strength (Kg/mm2) | Elongation (%) |
| 1 | 35 | Good | None | 40 | 52.5 | 57.9 | 13 |
| 2 | 35 | ,, | ,, | 40 | 52.5 | 57.3 | 13 |
| 3 | 35 | ,, | ,, | 40 | 52.9 | 57.3 | 13 |
| 4 | 30 | ,, | ,, | 35 | 52.9 | 57.3 | 14 |
| 5 | 30 | ,, | ,, | 35 | 52.9 | 57.3 | 14 |
| 6 | 35 | ,, | ,, | 45 | 51.9 | 56.9 | 14 |
| 7 | 30 | ,, | ,, | 30 | 52.3 | 57.8 | 14 |
| 8 | 35 | ,, | ,, | 45 | 52.7 | 57.8 | 13 |
| 9 | 35 | ,, | ,, | 40 | 51.8 | 57.8 | 13 |
| 10 | 30 | ,, | ,, | 35 | 51.8 | 57.8 | 13 |
| 11 | 30 | ,, | ,, | 35 | 52.6 | 57.5 | 12 |
| 12 | 40 | ,, | ,, | 50 | 52.6 | 57.5 | 13 |
| 13 | 30 | ,, | ,, | 35 | 52.6 | 57.4 | 14 |
| 14 | 30 | ,, | ,, | 35 | 52.4 | 57.4 | 14 |
| 15 | 30 | ,, | ,, | 35 | 52.4 | 57.4 | 13 |
| 16 | 35 | ,, | ,, | 40 | 52.8 | 57.4 | 13 |
| 17 | 35 | ,, | ,, | 35 | 52.6 | 57.5 | 14 |

Note:  * Bending of 90°, Bending Radius = 1.5t (t = Thickness of Plate).

The Test was carried out after 4 hours from the water quenching.

As can be seen from the above Table 9, all grain sizes of O-materials and W-materials were below 100 μm and grain growth was hardly detected in each material. Further, both the W-materials and T6-materials proved to have excellent properties as aircraft stringer material. In Table 9, the result of the case of 20% cold reduction is given, but also in case of cold reduction of 0 to 80%, grain size of less than 100 μm can be developed in the produced W-materials and every material exhibited sufficiently improved properties as aircraft stringer material.

EFFECT OF ALLOY COMPOSITION
Example 11

Ingots of alloy Nos. 3 to 6 400 mm in thickness were homogenized by heating at 470°C for 25 hours, hot rolled to provide plate 6 mm thick between an initial temperature of 400°C and a final temperature of 300°C. Following hot rolling, the plates were cold rolled to plates 3 mm thick and annealed by heating to a temperature of 460°C at an average heating rate of 220°C/min., holding at the temperature for five minutes, cooling at a cooling rate of 10°C/min., reheating at 300°C for one hour and finally air cooling, providing O-materials 3 mm thick.

Comparative O-materials were prepared from ingots of alloy Nos. 7 and 8 400 mm thick according to the procedure described in case of alloy Nos. 3 to 6.

Example 12

The O-materials prepared in Example 11 were cold worked to cold reduction of 0 to 75%, solution heat treated at 470°C for 40 minutes using the salt bath and water quenched to produced W-materials. Grain sizes of thus obtained W-materials are given in Table 10.

TABLE 10

| Cold Reduction | Grain Size of W—Material ($\mu$m) | | | | | |
|---|---|---|---|---|---|---|
| Alloy No. | 0% | 10% | 20% | 30% | 60% | 75% |
| 3 | 30 | 35 | 40 | 35 | 30 | 30 |
| 4 | 30 | 30 | 35 | 35 | 30 | 30 |
| 5 | 30 | 35 | 35 | 35 | 30 | 30 |
| 6 | 32 | 35 | 35 | 35 | 25 | 30 |
| 7 | 30 | 35 | 40 | 35 | 30 | 30 |
| 8 | 35 | 35 | 40 | 35 | 30 | 30 |

From Table 10 is can be seen that grain sizes of all materials are less than 100 µm over the wide range of cold reductions.

Further, O-materials prepared in Example 11 were cold worked to 20% cold reduction, solution heat treated at 470°C for 40 minutes using the salt bath and water quenched to provide W-materials. Properties of O-materials and W-materials are shown in Table 11 below. In addition to the properties, T6-materials which were produced by aging the W-materials receiving 20% cold reduction at 120°C for 24 hours were examined. Properties of T6-materials also are shown in the Table 11.

Upper limits of cold reduction practicable in cold working process were measured and the results are given in Table 11.

21

TABLE 11

| Alloy No. | Grain Size of O-Material ($\mu$m) | Upper Limit of Cold Reduction (%) | Grain Size of W-Material ($\mu$m) | Result of Bending Test of W—Material* | | Stress Corrosion Cracking Life of T6—Material** | Mechanical Properties of T6—Material | | |
|---|---|---|---|---|---|---|---|---|---|
| | | | | External Appearance | Occurrence of Crack | | Yield Strength (Kg/mm$^2$) | Tensile Strength (Kg/mm$^2$) | Elongation (%) |
| 3 | 35 | 92 | 40 | Good | None | More than 30 days | 52.3 | 57.1 | 14 |
| 4 | 30 | 90 | 35 | ,, | ,, | ,, | 55.3 | 62.4 | 13 |
| 5 | 30 | 90 | 35 | ,, | ,, | ,, | 56.7 | 63.8 | 13 |
| 6 | 35 | 92 | 35 | ,, | ,, | ,, | 53.1 | 57.9 | 14 |
| 7 | 35 | 95 | 40 | ,, | ,, | ,, | 42.3 | 50.4 | 14 |
| 8 | 35 | 55 | 40 | ,, | ,, | 9 days | 60.9 | 67.8 | 12 |

Note:  * Bending of 90°, Bending Radius = 1.5t (t = Thickness of Plate).
The test was carried out after 4 hours from water quenching.

** Life to fracture when loading stress of 75% of yield strength to T6—materials in 3.5% NaCl aqueous solution.

From the above Table 11, it will be clear that in case of alloy Nos. 3—6 according to the present invention, very good properties can be attained, but in case of alloys Nos. 7 and 8, such good properties can not be attained. Alloy No. 8 was inferior in strength and alloy No. 8 was apt to occur stress corrosion cracking. Both alloys of Nos. 7 and 8 presented problem in application such as aircraft stringer. Further, referring to the upper limit of cold reduction in case of composition according to the present invention, extremely high degree of cold reduction can be achieved easily, while in case of comparative composition of alloy No. 8 such high degree of cold reduction is not practicable.

Further, corrosion-resistant clad O-materials and W-materials were produced in the following examples and their properties were examined.

In the following examples, the alloys listed in the above Table 1 were used as core materials and AA7072 alloy sheet having the following composition as cladding material.

The cladding alloy sheet was prepared by homogenizing AA7072 alloy ingot at 530°C for 24 hours and rolling to required thickness.

Cladding Alloy (AA7072 alloy)

| Chemical Composition (wt. %) | | | | | | | | |
|------|------|------|------|------|------|------|------|------|
| Si | Fe | Cu | Mn | Mg | Cr | Zn | Ti | Al |
| 0.09 | 0.18 | 0.01 | 0.01 | 0.01 | – | 1.1 | – | Re-minder |

Example 13

Clad O-materials 3 mm thick according to the present invention and clad O-materials 3 mm thick according to the conventional method were respectively prepared using ingots of alloy Nos. 1 and 4 and the above cladding alloy sheet in the following procedures.

Procedure according to the present invention:

Homogenization treatment of core alloy ingots (at 460°C for 16 hours) → Hot Clad-rolling (from 300 mm to 6 mm in thickness at 400°C) → Cold rolling (from 6 mm to 3 mm in thickness) → Annealing (rapid heating to a temperature of 450°C at a heating rate of 200°C/min. and holding for 3 minutes at the temperature → cooling at a cooling rate of 5°C/min → reheating at 300°C for 1 hour → cooling to 200°C at a cooling rate of 20°C/min.) → Clad O-materials according to the present invention.

Procedure according to the conventional method:

Homogenization treatment of core alloy ingots (at 460°C for 16 hours) → Hot clad-rolling (from 300 mm to 6 mm in thickness at 400°C) → Annealing (heating at 420°C for 1 hour → cooling at a rate of 30°C/hr → Cold rolling (from 6 mm to 3 mm in thickness) → Annealing (heating to 420°C at a rate of 0.5 to 1°C/min. and holding at 420°C for 2 hours → cooling at a rate of 25°C/hr → heating at 235°C for 6 hours → air cooling) → Clad O-materials according to the conventional method.

Thickness of cladding in both present and conventional method is 3% of the total thickness on each side.

Example 14

Following the procedures described in Example 13, the respective clad O-materials were further treated to produce clad W-materials in the following procedure.

Procedure according to the present invention:

→ Cold working (to cold reduction of 0—90%, as shown in Table 12) → Solution heat treatment (at 470°C for 40 minutes, using a salt bath) → Water quenching → Clad W-materials according to the present invention.

Procedure according to the conventional method:

→ Cold working (to cold reduction of 0—90%, as shown in Table 12) → Solution heat treatment (at 470°C for 40 minutes, using a salt bath) → Water quenching → W-materials according to the conventional method.

Properties of O-materials and W-materials prepared in Examples 13 and 14 were tested and are given in Table 12.

In comparing the present invention and the conventional method, it becomes clear from the Table 12 that grain size of O-material according to the present invention is very fine and can provide W-material having fine grain size below 100 μm over the wide range of cold reduction, that is, 0—90%. Such effects

23

eliminated orange peel and occurrence of crack during section roll forming and markedly improved bending property.

Further, W-material were subject to T6 type treatment to produce T6-material and the mechanical properties were examined. From Table 12, T6-materials of the present invention proved to be superior to those of the conventional method.

Still further, the respective T6-materials were chemical milled to 20% reduction in thickness in 10% NaOH aqueous solution and surface roughness was measured. After chemical milling, fatigue test was carried out on each T6-material and the result is summarized in Table 12. As can be seen from Table 12, clad T6-materials according to the present invention are superior to those of the conventional method in surface roughness and fatigue strength owing to fine grain size.

TABLE 12

| Core Alloy No. | Core Grain Size of O—Material ($\mu$m) | Cold Reduction (%) | Core Grain Size of W—Material ($\mu$m) | Result of Bending Test *1 | | Mechanical Properties of T6—Material | | | Fracture Toughness (MN. $m^{-3/2}$) | Surface Roughness after Chemical Milling ($\mu$m) | Fatigue Strength after Chemical Milling ($Kg/mm^2$) |
|---|---|---|---|---|---|---|---|---|---|---|---|
| | | | | External Appearance | Occurrence of Crack | Yield Strength ($Kg/mm^2$) | Tensile Strength ($Kg/mm^2$) | Elongation % | | | |
| 1 *2 | 30 | 0 | 30 | Good | None | 49.1 | 55.0 | 15 | 122 | 14 | 18 |
| | | 10 | 35 | ,, | ,, | 50.0 | 55.6 | 13 | 122 | 16 | 18 |
| | | 20 | 40 | ,, | ,, | 50.6 | 55.3 | 13 | 124 | 20 | 17 |
| | | 30 | 35 | ,, | ,, | 49.4 | 55.3 | 13 | 124 | 17 | 18 |
| | | 60 | 30 | ,, | ,, | 49.6 | 55.5 | 15 | 124 | 15 | 18 |
| | | 90 | 25 | ,, | ,, | 49.0 | 55.4 | 15 | 127 | 12 | 18 |
| 1 *3 | 200 | 0 | 200 | Orange Peel | Considerable Crack | 48.0 | 54.3 | 9 | 88 | 100 | 7.2 |
| | | 10 | 220 | ,, | ,, | 49.0 | 54.9 | 9 | 80 | 100 | 7.6 |
| | | 20 | 280 | ,, | ,, | 49.2 | 54.7 | 8 | 80 | 130 | 7.0 |
| | | 30 | 190 | ,, | Slight Crack | 48.4 | 54.2 | 10 | 87 | 90 | 8.4 |
| | | 60 | 50 | Good | None | 47.7 | 54.5 | 13 | 114 | 25 | 16 |

0 030 070

TABLE 12 (Continued)

| Alloy No. | Core Grain Size of O-Material (μm) | Cold Reduction (%) | Core Grain Size of W-Material (μm) | Result of Bending Test *1 | | Mechanical Properties of T6-Material | | | Fracture Toughness (MN. $m^{-3/2}$) | Surface Roughness after Chemical Milling (μm) | Fatigue Strength after Chemical Milling (Kg/mm²) |
|---|---|---|---|---|---|---|---|---|---|---|---|
| | | | | External Appearance | Occurrence of Crack | Yield Strength (Kg/mm²) | Tensile Strength (Kg/mm²) | Elongation (%) | | | |
| 4 *2 | 25 | 0 | 25 | Good | None | 51.1 | 58.0 | 17 | 117 | 12 | 17 |
| | | 10 | 30 | ,, | ,, | 52.0 | 58.6 | 15 | 117 | 14 | 17 |
| | | 20 | 35 | ,, | ,, | 52.6 | 58.3 | 14 | 121 | 18 | 16.3 |
| | | 30 | 35 | ,, | ,, | 51.4 | 58.3 | 15 | 121 | 18 | 16.1 |
| | | 60 | 25 | ,, | ,, | 50.6 | 58.0 | 16 | 121 | 12 | 17.4 |
| | | 90 | 25 | ,, | ,, | 50.7 | 58.3 | 16 | 122 | 12 | 18.1 |
| 4 *3 | 180 | 0 | 190 | Orange peel | Slight Crack | 50.2 | 57.3 | 10 | 84 | 93 | 8 |
| | | 10 | 210 | ,, | Considerable Crack | 50.9 | 58.0 | 9 | 79 | 100 | 8 |
| | | 20 | 250 | ,, | ,, | 51.2 | 57.7 | 9 | 79 | 130 | 7.4 |
| | | 30 | 180 | ,, | Slight Crack | 50.7 | 57.7 | 9 | 82 | 100 | 7.9 |
| | | 60 | 50 | Good | None | 50.0 | 57.5 | 13 | 110 | 25 | 15.4 |

Note: *1 Bending of 90°, Bending Radius = 1.5t (t = Thickness of Plate)
The test was conducted after 4 hours since the water quenching.

*2 Present Invention.

*3 Conventional Method.

## EFFECT OF HEATING RATE
### Example 15

Core ingots 350 mm thick of alloy No. 1 were homogenized at 470°C for 24 hours, hot clad-rolled with the cladding alloy on its both sides between a starting temperature of 420°C and a final temperature of 340°C to provide clad plates 6 mm thick. Subsequently, the hot clad-rolled plates were cold rolled to provide clad plates 3 mm thick, and received following annealing treatment to provide clad O-materials 3 mm thick. Annealing was accomplished by heating to a temperature of 450°C at various heating rates shown in Table 13, holding at the temperature for two minutes and cooling at a cooling rate of 25°C/hr. A clad rate of the clad O-material was 2.5% on each side.

### Example 16

The clas O-materials obtained in Example 15 were further cold worked to various cold reductions shown in Table 13, solution heat treated at 470°C for 40 minutes using the salt bath and water quenched to provide W-materials.

Relation between core grain sizes of O- and W-materials and heating rate in annealing step is given in Table 13.

### TABLE 13

| Cold Reduction (%) / Heating Rate to 450°C (°C/min) | Core Grain Size of W—Material (μm) | | | | | Core Grain Size of O—Material (μm) |
|---|---|---|---|---|---|---|
| | 0 | 10 | 20 | 33 | 60 | |
| 1400 | 25 | 25 | 33 | 30 | 25 | 30 |
| 380 | 30 | 30 | 35 | 30 | 28 | 30 |
| 80 | 30 | 30 | 35 | 35 | 30 | 30 |
| 40 | 30 | 35 | 40 | 40 | 30 | 30 |
| 20 | 35 | 35 | 45 | 40 | 30 | 35 |
| 14 | 75 | 85 | 85 | 75 | 35 | 75 |
| 11* | 110 | 130 | 180 | 160 | 40 | 110 |
| 7* | 130 | 150 | 200 | 170 | 45 | 110 |
| 2.2* | 200 | 230 | 280 | 220 | 45 | 180 |
| 0.9* | 200 | 250 | 300 | 220 | 45 | 180 |

Note: * Heating rate according to the conventional practice.

As can be seen from Table 13, when heating rate to 450°C exceeds 11°C/min., the core grain sizes of O-material and W-material are less than 100 m and fine. On the contrary, when heating rate is 11°C/min. or less marked grain growth occurs and the core grain size of O- and W-materials exceeds 100 μm.

The clad O-materials which were heated to 450°C at rates of 80°C/min., 20°C/min., 14°C/min., 11°C/min. and 0.9°C/min. in annealing step were further tested. The respective O-materials were cold worked to cold reduction of 0 to 80%, which is practiced in usual production of aircraft stringer and stringer frame, solution heat treated at 470°C for 40 minutes using the salt bath and water quenched to produce clad W-materials.

Following water quenching, the respective W-materials were aged at 120°C for 24 hours to provide clad T6-materials. Properties of the W-materials and the T6-materials are given in Table 14. It will be clear from this Table that heating rate exceeding 11°C/min. is extremely effective to produce desired stringer materials. Also, highly improved corrosion resistance was achieved since these materials were clad with the AA7072 alloy.

27

TABLE 14

| Average Heating Rate (°C/min) | Cold Reduction (%) | Core Grain Size of W—Material ($\mu$m) | Result of Bending Test of W—Material* | | Mechanical Properties of T6—Material | | |
|---|---|---|---|---|---|---|---|
| | | | External Appearance | Occurrence of Crack | Yield Strength (Kg/mm$^2$) | Tensile Strength (Kg/mm2) | Elongation (%) |
| 80 | 0 | 30 | Good | None | 49.0 | 55.1 | 15 |
| | 10 | 30 | ,, | ,, | 50.0 | 55.6 | 12 |
| | 20 | 35 | ,, | ,, | 50.4 | 55.9 | 12 |
| | 33 | 35 | ,, | ,, | 48.8 | 54.8 | 15 |
| | 50 | 30 | ,, | ,, | 48.4 | 55.3 | 15 |
| | 80 | 25 | ,, | ,, | 48.2 | 55.7 | 15 |
| 20 | 0 | 35 | ,, | ,, | 49.0 | 55.0 | 14 |
| | 10 | 35 | ,, | ,, | 50.6 | 55.3 | 11 |
| | 20 | 45 | ,, | ,, | 51.0 | 55.0 | 12 |
| | 33 | 40 | ,, | ,, | 48.9 | 54.8 | 14 |
| | 50 | 30 | ,, | ,, | 47.9 | 55.6 | 16 |
| | 80 | 30 | ,, | ,, | 48.3 | 55.3 | 15 |

TABLE 14 (Continued)

| Average Heating Rate (°C/min) | Cold Reduction (%) | Core Grain Size of W—Material ($\mu$m) | Result of Bending Test of W—Material* | | Mechanical Properties of T6—Material | | |
| --- | --- | --- | --- | --- | --- | --- | --- |
| | | | External Appearance | Occurrence of Crack | Yield Strength (Kg/mm$^2$) | Tensile Strength (Kg/mm$^2$) | Elongation (%) |
| 14 | 0 | 75 | Good | None | 49.0 | 55.0 | 16 |
| | 10 | 85 | ,, | ,, | 50.2 | 55.1 | 13 |
| | 20 | 85 | ,, | ,, | 50.4 | 54.7 | 12 |
| | 33 | 75 | ,, | ,, | 48.5 | 54.6 | 14 |
| | 50 | 35 | ,, | ,, | 48.3 | 55.6 | 14 |
| | 80 | 35 | ,, | ,, | 48.2 | 55.5 | 15 |
| 11 | 0 | 110 | Orange Peel | Slight Crack | 48.3 | 54.5 | 13 |
| | 10 | 130 | ,, | ,, | 49.6 | 54.3 | 12 |
| | 20 | 180 | ,, | ,, | 49.5 | 55.0 | 12 |
| | 33 | 160 | ,, | ,, | 48.7 | 54.7 | 12 |
| | 50 | 40 | Good | None | 48.3 | 54.5 | 14 |
| | 80 | 40 | ,, | ,, | 48.0 | 54.0 | 14 |

0 030 070

TABLE 14 (Continued)

| Average Heating Rate (°C/min) | Cold Reduction (%) | Core Grain Size of W—Material ($\mu$m) | Result of Bending Test of W.—Material* | | Mechanical Properties of T6—Material | | |
|---|---|---|---|---|---|---|---|
| | | | External Appearance | Occurrence of Crack | Yield Strength (Kg/mm$^2$) | Tensile Strength (Kg/mm$^2$) | Elongation (%) |
| 0.9 | 0 | 200 | Orange Peel | Considerable Crack | 48.0 | 54.5 | 10 |
| | 10 | 250 | ,, | ,, | 49.1 | 55.0 | 9 |
| | 20 | 300 | ,, | ,, | 49.2 | 54.8 | 9 |
| | 33 | 220 | ,, | ,, | 48.8 | 54.8 | 9 |
| | 50 | 45 | Good | None | 48.0 | 54.9 | 9 |
| | 80 | 40 | ,, | ,, | 47.8 | 54.6 | 10 |

Note: *90° Bending, Bending Radius = 1.5t (t = Thickness of Plate)

The Test was conducted after 4 hours from water quenching.

# 0 030 070

### EFFECT OF HEATING TEMPERATURE
### Example 17

Cold rolled plates 3 mm thick were prepared using ingots of alloy No. 2 as core in the same procedure as in case of the procedure described in Example 15, except that core ingots were clad with cladding alloy on its one side. Following cold rolling, the plates were subjected to following two stage annealing treatment. In the first stage, the plates were heated to various heating temperature of 320 to 520°C at various heating rates, shown in Table 15, held at the temperatures for times shown in the same Table and cooled at a rate of 5°C/min. After the first heating treatment, the plates were reheated at 300°C for one hour and cooled at a rate of 20°C/hr., providing one-side clad O-materials 3 mm thick. Clad rate of the product was 2.5%.

### Example 18

The O-materials obtained in Example 17 were cold worked to various cold reductions, solution heat treated at 470°C for 40 minutes using the salt bath and water quenched, providing one-side clad W-materials.

Relation between the core grain sizes of O-materials and W-materials and the first stage heating temperature is given in Table 15. It can be seen from the above Table 15 that only O-material which has received annealing treatment characterized by rapid heating to 320 to 500°C can be converted to W-material having fine core grain size even after cold working to the small amount of cold reduction and subsequent solution heat treatment. If heating temperature is beyond the above range, W-material of fine core grain size cannot be obtained after cold working to the small amount of cold reduction and solution heat treatment. That is, core grain size of W-material becomes larger than 100 μm.

TABLE 15

| Average Heating Rate (°C/min) | Heating Temperature (°C) | Holding Time (min.) | Core Grain Size of W—Material (μm) | | | | | | Core Grain Size of O—Material (μm) |
|---|---|---|---|---|---|---|---|---|---|
| | | | Cold Reduction (%) | | | | | | |
| | | | 0 | 10 | 20 | 30 | 60 | 80 | |
| 230 | 475 | 1 | 30 | 30 | 35 | 35 | 30 | 25 | 30 |
| 218 | 455 | 3 | 30 | 30 | 35 | 35 | 30 | 25 | 30 |
| 210 | 440 | 6 | 30 | 35 | 35 | 35 | 30 | 30 | 30 |
| 200 | 420 | 12 | 35 | 40 | 40 | 40 | 35 | 30 | 35 |
| 190 | 400 | 10 | 40 | 40 | 45 | 45 | 35 | 30 | 40 |
| 175 | 370 | 18 | 40 | 45 | 55 | 50 | 35 | 30 | 40 |
| 150 | 320 | 55 | 40 | 50 | 60 | 60 | 35 | 35 | 40 |
| 250 | 520 * | 2 | 100 | 120 | 150 | 130 | 50 | 40 | 90 |

Note: * Eutectic melting occurred.

Three selected from the one-side clad O-materials of Example 17 were further examined. The three O-material were cold worked up to maximum reduction of 80%, solution heat treated at 470°C for 40 minutes using the salt bath and water quenched to provide one-side clad W-materials. W-materials were further aged at 122°C for 25 hours to produce one-side clad T6-materials. Properties of the above W-materials and T6-materials are shown in Table 16. From this table it is apparent that all materials have sufficient properties as stringer material.

31

TABLE 16

| Average Heating Rate (°C/min) | Heating Temperature (°C) | Cold Reduction (%) | Core Grain Size of W—Material ($\mu$m) | Result of Bending Test of W—Material* | | Mechanical Properties of T6—Material | | |
|---|---|---|---|---|---|---|---|---|
| | | | | External Appearance | Occurrence of Crack | Yield Strength (Kg/mm$^2$) | Tensile Strength (Kg/mm$^2$) | Elongation (%) |
| 230 | 475 | 0 | 30 | Good | None | 50.3 | 56.0 | 16 |
| | | 10 | 30 | ,, | ,, | 51.3 | 56.8 | 14 |
| | | 20 | 35 | ,, | ,, | 51.8 | 55.9 | 14 |
| | | 30 | 25 | ,, | ,, | 50.6 | 56.3 | 16 |
| | | 60 | 30 | ,, | ,, | 49.3 | 56.0 | 17 |
| | | 80 | 25 | ,, | ,, | 49.6 | 56.1 | 17 |
| 210 | 440 | 0 | 30 | ,, | ,, | 50.2 | 55.9 | 15 |
| | | 11 | 35 | ,, | ,, | 52.0 | 56.3 | 13 |
| | | 20 | 35 | ,, | ,, | 51.9 | 56.3 | 14 |
| | | 28 | 33 | ,, | ,, | 49.8 | 56.0 | 16 |
| | | 53 | 30 | ,, | ,, | 48.8 | 55.9 | 15 |
| | | 75 | 30 | ,, | ,, | 49.3 | 56.2 | 15 |
| 190 | 390 | 0 | 40 | ,, | ,, | 51.0 | 56.3 | 16 |
| | | 9 | 40 | ,, | ,, | 52.1 | 56.9 | 14 |
| | | 22 | 45 | ,, | ,, | 51.8 | 56.6 | 13 |
| | | 30 | 45 | ,, | ,, | 49.6 | 56.6 | 16 |
| | | 45 | 35 | ,, | ,, | 49.1 | 56.0 | 17 |
| | | 80 | 30 | ,, | ,, | 49.7 | 56.0 | 17 |

Note: * 90° Bending, Bending Radius = 1.5t (t = Thickness of Plate)
The test was conducted after 4 hours from water quenching.

### EFFECT OF HOLDING TIME AT HEATING TEMPERATURE
### Example 19

Cold rolled plates 3 mm thick were prepared from ingots of alloy No. 3 according to the practice described in Example 15. The plates were heated to temperatures of 480°C to 385°C at respective heating rates shown in Table 17, held at the heating temperature for various times and cooled at a rate of 5°C/min. Following cooling, the plates were reheated at 300°C for one hour and air cooled to produce clad O-material plates 3 mm thick. Clad rate of the O-materials were 2.5% on each side.

### Example 20

The O-materials produced in Example 19 were cold worked to 20% cold reduction which is apt to cause the marked grain growth, solution heat treated at 470°C for 40 minutes using the salt bath and water quenched to provide clad W-materials.

Relation between the core grain sizes of materials and rapid heating condition is shown in Table 17.

From the Table 17 it is shown that very fine core grain sizes are achieved in both the O- and W-materials over various holding times.

Further the O-materials in Example 19 were cold worked to cold reduction of 0 to 90%, solution heat treated at 470°C for 40 minutes using the salt bath and water quenched. Thus obtained W-materials were less than 100 µm in core grain size. Bending test (bending angle 90°, bending radius = 1.5t, t = thickness of plate) was conducted on the W-material after 4 hours since water quenching. As a result of bending test, crack and orange peel were not observed. The W-materials proved to be excellent as aircraft stringer material.

### EFFECT OF PRODUCTION CONDITION
### Example 21

O-materials of 2 to 5 mm in thickness clad with cladding alloy on its both side were prepared from 400 mm thick core ingots of alloy No. 1 shown in Table 1 under the conditions shown in Table 18. Clad rates all were 2.2% on each side.

TABLE 17

| Average Heating Rate (°C/min) | Heating Temperature (°C) | Holding Time | Core Grain Size of W—Material (μm) | Core Grain Size of O—Material (μm) |
|---|---|---|---|---|
| 250 | 475 | 20 sec. | 30 | 30 |
| | | 1 min. | 35 | 30 |
| | | 5  ,, | 35 | 30 |
| | | 20  ,, | 40 | 35 |
| | | 40  ,, | 40 | 35 |
| 220 | 455 | 30 sec. | 25 | 25 |
| | | 2 min. | 30 | 30 |
| | | 8  ,, | 35 | 30 |
| | | 25  ,, | 40 | 35 |
| | | 40  ,, | 50 | 45 |
| 180 | 415 | 6  ,, | 35 | 30 |
| | | 9  ,, | 35 | 30 |
| | | 30  ,, | 45 | 35 |
| | | 60  ,, | 55 | 45 |
| 175 | 390 | 10  ,, | 35 | 30 |
| | | 20  ,, | 45 | 35 |
| | | 30  ,, | 55 | 45 |
| | | 60  ,, | 60 | 50 |

TABLE 18

| Core Alloy No. | Homogenization of Core Ingot | Hot Clad-Rolling Conditions | | | Intermediate Annealing* | Cold Rolling Conditions | | Annealing | | | Reheating*** |
| | | Init. Temp. (°C) | Final Temp. (°C) | Thickness of Plate (mm) | | Cold Reduction (%) | Thickness of Plate (mm) | Rapid Heating Conditions | | | |
| | | | | | | | | Av. Heating Rate (°C/min) | Heating** | Cooling Rate | |
| 1 | 470°C × 24 hr. | 425 | 330 | 6 | not done | 33 | 4 | 200 | 450°C × 1 min. | 5°C/min. | 300°C × 1 hr. |
| 2 | 470°C × 24 hr. | 400 | 300 | 6 | 370°C × 1 hr. | 33 | 4 | 20 | 450°C × 2 min. | 5°C/min. | 300°C × 1 hr. |
| 3 | 465°C × 16 hr. | 425 | 310 | 6 | not done | 50 | 3 | 250 | 470°C × 3 min. | 5°C/min. | *300°C × 1 hr. |
| 4 | 475°C × 16 hr. | 425 | 310 | 6 | 390°C × 1 hr. | 50 | 3 | 15 | 480°C × 30 min. | 5°C/min. | *300°C × 1 hr. |
| 5 | 475°C × 16 hr. | 425 | 310 | 6 | 400°C × 1 hr. | 66 | 2 | 500 | 470°C × 2 min. | 10°C/min. | *470°C × 1 hr. |
| 6 | 475°C × 16 hr. | 425 | 310 | 6 | 400°C × 1 hr. | 66 | 2 | 35 | 400°C × 35 min. | 10°C/min. | *470°C × 1 hr. |
| 7 | 470°C × 16 hr. | 420 | 280 | 8 | not done | 50 | 4 | 230 | 475°C × 1 min. | 10°C/min. | *470°C × 1 hr. |
| 8 | 470°C × 16 hr. | 400 | 260 | 8 | ,, | 50 | 4 | 24 | 380°C × 40 min. | 10°C/min. | *470°C × 1 hr. |
| 9 | 470°C × 16 hr. | 425 | 380 | 5 | ,, | 40 | 3 | 57 | 430°C × 20 min. | 20°C/hr. | not done |
| 10 | 470°C × 16 hr. | 425 | 315 | 5 | ,, | 40 | 3 | 140 | 455°C × 2 min. | 20°C/hr. | ,, |
| 11 | 470°C × 12 hr. | 435 | 325 | 5 | ,, | 50 | 2.5 | 1200 | 470°C × 3 min. | 20°C/hr. | ,, |
| 12 | 475°C × 24 hr. | 415 | 345 | 5 | 350°C × 1 hr. | 50 | 2.5 | 38 | 405°C × 50 min. | 24°C/hr. | ,, |
| 13 | 475°C × 24 hr. | 415 | 280 | 9 | 400°C × 1 hr. | 66 | 3 | 800 | 460°C × 4 min. | 24°C/hr. | ,, |
| 14 | 475°C × 24 hr. | 415 | 320 | 8 | 400°C × 1 hr. | 75 | 2 | 440 | 460°C × 15 min. | 24°C/hr. | ,, |
| 15 | 470°C × 16 hr. | 420 | 320 | 10 | not done | 50 | 5 | 780 | 465°C × 3 min. | 24°C/hr. | ,, |
| 16 | 470°C × 16 hr. | 420 | 320 | 8 | 400°C × 1 hr. | 63 | 5 | 140 | 440°C × 10 min. | 24°C/hr. | ,, |
| 17 | 470°C × 16 hr. | 420 | 335 | 15 | 400°C × 1 hr. | 80 | 3 | 215 | 450°C × 2 min. | 28°C/hr. | ,, |

Note:   * Cooling rate after heating: 25°C/hr.

　　  ** First stage heating temperature × Holding time.

　  *** Second stage heating temperature × Holding time.

0 030 070

### Example 22

Clad O-materials produced under the conditions of Nos. 1 to 17 shown in Table 18 were further cold worked to 20% cold reduction, solution heat treated at 470°C for 40 minutes using the salt bath and water quenched to provide clad W-materials.

Table 19 shows properties of the O-materials and W-materials. The W-materials obtained in Example 22 were aged at 120°C for 24 hours to provide clad T6-materials. Properties of T6-materials are given in Table 19.

TABLE 19

| Core Alloy No. | Core Grain Size of O—Material ($\mu$m) | Result of Bending Test of W—Material* | | Core Grain Size of W—Material ($\mu$m) | Mechanical Properties of T6—Materials | | |
|---|---|---|---|---|---|---|---|
| | | External Appearance | Occurrence of Crack | | Yield Strength (Kg/mm$^2$) | Tensile Strength (Kg/mm$^2$) | Elongation (%) |
| 1 | 35 | Good | None | 38 | 50.5 | 56.9 | 12 |
| 2 | 35 | ,, | ,, | 38 | 50.5 | 56.0 | 12 |
| 3 | 35 | ,, | ,, | 38 | 51.0 | 56.0 | 12 |
| 4 | 30 | ,, | ,, | 32 | 51.0 | 56.0 | 13 |
| 5 | 30 | ,, | ,, | 33 | 51.0 | 56.0 | 13 |
| 6 | 35 | ,, | ,, | 40 | 49.9 | 55.4 | 13 |
| 7 | 30 | ,, | ,, | 33 | 50.3 | 56.0 | 13 |
| 8 | 35 | ,, | ,, | 45 | 50.7 | 56.0 | 14 |
| 9 | 35 | ,, | ,, | 40 | 49.8 | 56.0 | 14 |
| 10 | 30 | ,, | ,, | 35 | 49.8 | 56.0 | 14 |
| 11 | 30 | ,, | ,, | 35 | 50.6 | 56.0 | 13 |
| 12 | 40 | ,, | ,, | 55 | 50.6 | 56.0 | 13 |
| 13 | 30 | ,, | ,, | 40 | 50.6 | 56.0 | 13 |
| 14 | 30 | ,, | ,, | 40 | 50.4 | 56.0 | 13 |
| 15 | 30 | ,, | ,, | 40 | 50.4 | 56.0 | 13 |
| 16 | 35 | ,, | ,, | 45 | 50.8 | 56.0 | 13 |
| 17 | 35 | ,, | ,, | 35 | 50.4 | 56.6 | 14 |

Note: * Bending of 90°, Bending Radius = 1.5t (t = Thickness of Plate).

The Test was conducted after 4 hours from the water quenching.

As can be seen from the above Table 19, all core grain sizes of O-materials and W-materials were below 100 $\mu$m and grain growth was hardly detected in each material. Further, both the W-materials and T6-materials proved to have excellent properties as aircraft stringer material. In Table 19, the result of the case of 20% cold reduction is given. However, also in case of cold reduction of 0 to 80%, grain size of less than 100 $\mu$m can be developed in the produced W-materials and every material exhibited sufficiently improved properties as aircraft stringer material.

## EFFECT OF ALLOY COMPOSITION
### Example 23

Core ingots of alloy Nos. 3 to 6 400 mm in thickness were homogenized by heating at 470°C for 25 hours and hot clad-rolled with the cladding alloy on its one side to provide one-side clad plate 6 mm thick between an initial temperature of 400°C and a final temperature of 300°C. Following hot clad-rolling, the plates were cold rolled to plates 3 mm thick and annealed by heating to a temperature of 460°C at an average heating rate of 300°C/min., holding at the temperature for five minutes, cooling at a cooling rate of 10°C/min., reheating at 300°C for one hour and finally air cooling, providing one-side clad O-materials 3 mm thick with clad rate of 2.6%.

Comparative O-materials were prepared from ingots of alloy Nos. 7 and 8 400 mm thick according to the procedure described in case of alloy Nos. 3 to 6.

### Example 24

The O-materials prepared in Example 23 were cold worked to cold reduction of 0 to 75%, solution heat treated at 470°C for 40 minutes using the salt bath and water quenched to produce one-side clad W-materials. Core grain sizes of thus obtained W-materials are given in Table 20.

TABLE 20

| Core Alloy No. \ Cold Reduction | Core Grain Size of W—Material ($\mu$m) | | | | | |
|---|---|---|---|---|---|---|
| | 0% | 10% | 20% | 33% | 60% | 75% |
| 3 | 30 | 35 | 40 | 35 | 30 | 30 |
| 4 | 30 | 30 | 35 | 35 | 30 | 30 |
| 5 | 30 | 35 | 35 | 35 | 30 | 30 |
| 6 | 32 | 35 | 35 | 35 | 25 | 30 |
| 7 | 30 | 35 | 40 | 35 | 30 | 30 |
| 8 | 35 | 35 | 40 | 35 | 30 | 30 |

From Table 20 it can be seen that core grain sizes of all materials are less than 100 μm over the preciced cold reductions.

Further, O-materials prepared in Example 23 were cold worked to 20% cold reduction, solution heat treated at 470°C for 40 minutes using the salt bath and water quenched to provide W-materials. Properties of O-materials and W-materials are shown in Table 21 below. In addition to the properties, T6-materials which were produced by aging the W-materials receiving 20% cold reduction at 120°C for 24 hours were examined. Properties of T6-materials also are given in the Table 21.

Upper limits of cold reduction practicable in cold working process were measured and the obtained result is given in Table 21.

TABLE 21

| Core Alloy No. | Core Grain Size of O—Material ($\mu$m) | Upper Limit of Cold Reduction (%) | Core Grain Size of W—Material ($\mu$m) | Result of Bending Test of W—Material* | | Stress Corrosion Cracking Life of T6— Material** | Mechanical Properties of T6—Material | | |
|---|---|---|---|---|---|---|---|---|---|
| | | | | External Appearance | Occurrence of Crack | | Yield Strength (Kg/mm2) | Tensile Strength (Kg/mm2) | Elongation (%) |
| 3 | 35 | 92 | 40 | Good | None | more than 30 days | 51.3 | 56.1 | 13 |
| 4 | 30 | 90 | 35 | ,, | ,, | ,, | 54.3 | 61.0 | 12 |
| 5 | 30 | 90 | 35 | ,, | ,, | ,, | 55.7 | 62.8 | 12 |
| 6 | 35 | 92 | 35 | ,, | ,, | ,, | 52.1 | 56.9 | 14 |
| 7 | 35 | 95 | 40 | ,, | ,, | ,, | 40.3 | 48.3 | 14 |
| 8 | 35 | 55 | 40 | ,, | ,, | 9 days | 60.1 | 67.0 | 12 |

Note: * Bending of 90°, Bending Radius = 1.5t (t = Thickness of Plate)

The test conducted after 4 hours from water quenching.

** Life to fracture when loading stress of 75% of yield strength to T6—materials in 3.5% NaCl aqueous solution.

From the above Table 21, it will be clear that in case of alloy Nos. 3—6, according to the present invention, very good degree of properties can be attained, but in case of alloy Nos. 7 and 8, such good properties cannot be attained. Alloy No. 7 was inferior in strength and alloy No. 8 was apt to occur stress corrosion cracking. Both alloys of Nos. 7 and 8 presented problem in application such as aircraft stringer and stringer frame. Further, referring to the upper limit of cold reduction, in case of composition according to the present invention, extremely high degree of cold reduction can be achieved easily, while in case of comparative composition of alloy No. 8 such high degree of cold reduction is not practicable.

## Claims

1. A method for producing an aircraft stringer material having a grain size not exceeding 100 μm, said method comprising steps of:

homogenizing an aluminum base alloy consisting essentially of 5.1 to 8.1 wt.% Zn, 1.8 to 3.4 wt.% Mg, 1.2 to 2.6 wt.% Cu, up to 0.20 wt.% Ti and at least one of 0.18 to 0.35 wt.% Cr and 0.05 to 0.25 wt.% Zr, the balance being aluminum and impurities; said impurities being limited within the range of up to 0.50 wt.% Fe, up to 0.40 wt.% Si, and up to 0.70 wt.% Mn.

hot rolling said homogenized alloy;

cold rolling said hot rolled alloy to provide a plate having a predetermined thickness; and

annealing said cold rolled plate by rapid heating to a temperature of 320 to 500°C at an average heating rate exceeding 11°C/min.

the said grain size of said material not exceeding 100 μm.

2. The method in accordance with claim 1, wherein in the annealing step, said rapid heating is followed by cooling at an average cooling rate of less than 30°C/hr.

3. The method in accordance with claim 1, wherein in the annealing step, said rapid heating is followed by cooling at an average cooling rate of 30°C/hr. and upward.

4. The method in accordance with claim 3, wherein said cooling is followed by reheating to a temperature of 200 to 500°C and cooling at an average cooling rate not exceeding 30°C/hr.

5. The method in accordance with claim 4, wherein said cooling is followed by reheating to a temperature of 200 to less than 350°C and air cooling.

6. A method in accordance with any preceding claim, further including cold working said annealed plate up to maximum cold reduction of 90%; and solution heat treating said cold worked plate.

7. A method for producing an aircraft stringer material having a core grain size not exceeding 100 μm and high corrosion-resistance, said method comprising steps of: homogenizing a core aluminum base alloy consisting essentially of 5.1 to 8.1 wt.% Zn, 1.8 to 3.4 wt.% Mg, 1.2 to 2.6 wt.% Cu, up to 0.20 wt.% Ti and at least one of 0.18 to 0.35 wt.% Cr and 0.05 to 0.25 wt.% Zr, the balance being aluminum and impurities, said impurities being limited within the range of up to 0.50 wt.% Fe, up to 0.40 wt.% Si and up to 0.70 wt.% Mn, hot clad-rolling a cladding layer consisting of AA7072 alloy on at least one side of said homogenized core alloy; cold rolling said hot clad rolled core alloy and cladding layer to provide a clad plate having a given thickness; annealing said cold rolled plate by rapid heating to a temperature of 320 to 500°C at an average heating rate exceeding 11°C/min. the said grain size of said core of said material not exceeding 100 μm.

8. The method in accordance with claim 7, wherein in the annealing step, said rapid heating is followed by cooling at an average cooling rate of less than 30°C/hr.

9. The method in accordance with claim 7, wherein in the annealing step, said rapid heating is followed by cooling at an average cooling rate of 30°C/hr. and upward.

10. The method in accordance with claim 9, wherein said cooling is followed by reheating to a temperature of 200 to 500°C and cooling at an average cooling rate not exceeding 30°C/hr.

11. The method in accordance with claim 9, wherein said cooling is followed by reheating to a temperature of 200 to less than 350°C and air cooling.

12. A method in accordance with any one of claims 7 to 11, further including the steps of cold working said annealed plate up to maximum cold reduction of 90%; and solution heat treating said cold worked plate.

## Patentansprüche

1. Verfahren zur Herstellung von Versteifungsmaterialien für Flugzeuge mit einer Korngrösse, die 100 μm nicht übersteigt, wobei das Verfahren folgende Stufen umfasst:

Homogenisieren einer auf Aluminium aufgebauten Legierung, bestehend im wesentlichen aus 5,1 bis 8,1 Gew.% Zn, 1,8 bis 3,4 Gew.% Mg, 1,2 bis 2,6 Gew.% Cu, bis zu 0,20 Gew.% Ti und wenigstens einem von 0,18 bis 0,35 Gew.% Cr und 0,05 bis 0,25 Gew.% Zr, wobei der Rest Aluminium und Verunreinigungen sind; wobei die Verunreinigungen begrenzt sind innerhalb eines Bereiches von bis zu 0,50 Gew.% Fe, bis zu 0,40 Gew.% Si und bis zu 0,70 Gew.% Mn;

Warmwalzen der homogenisierten Legierung;

Kaltwalzen der warmgewalzten Legierung unter Ausbildung eines Bleches in einer vorbestimmten Dicke und

Tempern des kaltgewalzten Bleches durch schnelles Erhitzen auf eine Temperatur von 320 bis 500°C mit einer durchschnittlichen Erhitzungsrate die 11°C/Min. übersteigt;

wobei die Korngrösse des Materials 100 µm nicht übersteigt.

2. Verfahren gemäss Anspruch 1, worin bei der Temperstufe im Anschluss an das schnelle Erhitzen mit einerdurchschnittlichen Kühlrate von weniger als 30°C/h gekühlt wird.

3. Verfahren gemäss Anspruch 1, worin bei der Temperstufe im Anschluss an das schnelle Erhitzen mit einer durchschnittlichen Kühlrate von 30°C/h und mehr gekühlt wird.

4. Verfahren gemäss Anspruch 3, worin sich an das Kühlen ein Wiedererhitzen auf eine Temperatur von 200 bis 500°C und Kühlen mit einer durchschnittlichen Kühlrate, die 30°C/h nicht übersteigt, anschliesst.

5. Verfahren gemäss Anspruch 4, worin sich an das Kühlen ein Wiedererhitzen auf eine Temperatur von 200 bis weniger als 350°C und Luftkühlen anschliesst.

6. Verfahren gemäss einem der vorhergehenden Ansprüche, welches weiterhin das Kaltbearbeiten des getemperten Bleches bis zu einer maximalen Kaltreduktion von 90 % und Lösungsglühbehandlung des kaltbearbeiteten Bleches einschliesst.

7. Verfahren zur Herstellung von Versteifungsmaterialien für Flugzeuge mit einer Korngrösse von nicht mehr als 100 µm und hoher Korrosionsbeständigkeit, wobei das Verfahren folgende Stufen umfasst:

Homogenisieren einer auf Aluminium aufgebauten Kernlegierung, bestehend im wesentlichen aus 5,1 bis 8,1 Gew.% Zn, 1,8 bis 3,4 Gew.% Mg, 1,2 bis 2,6 Gew.% Cu, bis zu 0,20 Gew.% Ti und wenigstens einem von 0,18 bis 0,35 Gew.% Cr und 0,05 bis 0,25 Gew.% Zr, wobei der Rest Aluminium und Verunreinigungen sind, wobei die Verunreinigungen in einem Bereich von bis zu 0,50 Gew.% Fe, bis zu 0,40 Gew.% Si und bis zu 0,70 Gew.% Mn begrenzt sind, Aufbringen einer Plattierschicht durch Warmplattierwalzen, bestehend aus AA7072-Legierung, auf wenigstens eine Seite der homogenisierten Kernlegierung, Kaltwalzen der warmplattiergewalzten Kernlegierung und Plattierschicht unter Ausbildung eines plattierten Bleches mit einer gegebenen Dicke; Tempern des kaltegewalzten Bleches durch schnelles Erhitzen auf eine Temperatur von 320 bis 500°C mit einer durchschnittlichen Erhitzungsrate, die 11°C/Min. übersteigt, wobei die Korngrösse des Kerns des Materials 100 µm nicht übersteigt.

8. Verfahren gemäss Anspruch 7, worin bei der Temperstufe im Anschluss an das schnelle Erhitzen mit einer Durchschnittskühlrate von weniger als 30°C/h gekühlt wird.

9. Verfahren gemäss Anspruch 7, worin bei der Temperstufe im Anschluss an das schnelle Erhitzen mit einer Durchschnittskühlrate von 30°C/h und mehr gekühlt wird.

10. Verfahren gemäss Anspruch 9, worin man im Anschluss an das Kühlen nochmals auf eine Temperatur von 200 bis 500°C erhitzt und dann mit einer durchschnittlichen Kühlgeschwindigkeit, die 30°C/h nicht übersteigt, kühlt.

11. Verfahren gemäss Anspruch 9, worin man im Anschluss an das Kühlen auf eine Temperatur von 200 bis weniger als 350°C wiedererhitzt und luftkühlt.

12. Verfahren gemäss einem der Ansprüche 7 bis 11, weiterhin einschliessend die Stufen der Kaltverarbeitung des getemperten Bleches bis zu einer maximalen Kaltreduktion von 90 % und Behandeln des kaltebearbeiteten Bleches durch Lösungsglühbehandlung.


## Revendications

1. Procédé de fabrication d'un matériau pour raidisseurs d'aéronefs ayant une dimension granulaire ne dépassant pas 100 µm, ledit procédé comprenant les étapes de:

homogénéisation d'un alliage à base d'aluminium consistant essentiellement en 5,1 à 8,1 % en poids de Zn, 1,8 à 3,4 % en poids de Mg, 1,2 à 2,6 % en poids de Cu, 0,2 % en poids au maximum de Ti et au moins 0,18 à 0,35 % en poids de Cr ou 0,05 à 0,25 % en poids de Zr, le reste étant de l'aluminium et des impuretés, les impuretés étant limitées à 0,50 % en poids pour Fe, 0,40 % en poids pour Si, et 0,70 % en poids pour Mn,

laminage à chaud de l'alliage homogénéisé,

laminage à froid de l'alliage laminé à chaud afin qu'il forme une plaque ayant une épaisseur prédéterminée, et

recuit de la plaque laminée à froid par chauffage rapide à une température de 320 à 500°C avec une vitesse moyenne de chauffage supérieure à 11°C/min,

la dimension granulaire du matériau ne dépassant pas 100 µm.

2. Procédé selon la revendication 1, dans lequel, au cours de l'étape de recuit, le chauffage rapide est suivi par refroidissement à une vitesse moyenne inférieure à 30°C/h.

3. Procédé selon la revendication 1, dans lequel, au cours de l'étape de recuit, le chauffage rapide est suivi par refroidissement à une vitesse moyenne de 30°C/h et plus.

4. Procédé selon la revendication 3, dans lequel le refroidissement est suivi d'un réchauffage à une température de 200 à 500°C et d'un refroidissement à une vitesse moyenne ne dépassant pas 30°C/h.

5. Procédé selon la revendication 4, dans lequel le refroidissement est suivi d'un réchauffage à une température comprise entre 200 et moins de 350°C, et par refroidissement à l'air.

6. Procédé selon l'une quelconque des revendications précédentes, comprenant en outre l'écrouissage

40

# 0 030 070

de la plaque recuite avec une réduction maximale à froid de 90 %, et le traitement thermique de recuit de mise en solution de la plaque écrouie.

7. Procédé de fabrication d'un matériau pour raidisseurs d'aéronefs ayant une dimension granulaire d'âme ne dépassant pas 100 µm et une résistance élevée à la corrosion, ledit procédé comprenant les étapes d'homogénéisation d'un alliage d'âme à base d'aluminium consistant essentiellement en 5,1 à 8,1 % en poids de Zn, 1,8 à 3,4 % en poids de Mg, 1,2 à 2,6 % en poids de Cu, 0,20 % en poids au maximum de Ti et au moins 0,18 à 0,35 % en poids de Cr ou 0,05 à 0,25 % en poids de Zr, le reste étant de l'aluminium et des impuretés, les impuretés étant limitées à 0,50 % en poids pour Fe, 0,40 % en poids pour Si et 0,70 % en poids pour Mn, de laminage à chaud d'une couche de placage consistant en un alliage AA7072 sur une face au moins de l'alliage homogénéisé d'âme, de laminage à froid de l'alliage d'âme laminé à chaud et de la couche de placage afin qu'ils forment une plaque plaquée d'épaisseur donnée, de recuit de la plaque laminée à froid par chauffage rapide à une température de 320 à 500°C avec une vitesse moyenne de chauffage dépassant 11°C/min, la dimension granulaire de l'âme du matériau ne dépassant pas 100 µm.

8. Procédé selon la revendication 7, dans lequel, dans l'étape de recuit, le chauffage rapide est suivi d'un refroidissement à une vitesse moyenne inférieure à 30°C/h.

9. Procédé selon la revendication 7, dans lequel, dans l'étape de recuit, le chauffage rapide est suivi d'un refroidissement à une vitesse moyenne de 30°C/h et plus.

10. Procédé selon la revendication 9, dans lequel le refroidissement est suivi d'un réchauffage à une température de 200 à 500°C et d'un refroidissement à une vitesse moyenne de dépassant pas 30°C/h.

11. Procédé selon la revendication 9, dans lequel le refroidissement est suivi d'un réchauffage à une température comprise entre 200 et moins de 350°C, et d'un refroidissement par air.

12. Procédé selon l'une quelconque des revendications 7 à 11, comprenant en outre les étapes d'écrouissage de la plaque recuite avec une réduction à froid au maximum égale à 90 %, et de traitement thermique de recuit de mise en solution de la plaque écrouie.

FIG. 1

3

2

1

FIG. 3

FIG. 2

FIG. 4

# FIG. 5

# FIG. 6

(AMOUNT OF COLD REDUCTION)

| A | B | C | D | E | F | G |
| 0% | 10% | 30% | 60% | 20% | 75% | 80% |
| 180μm | 220μm | 250μm | 50μm | 300μm | 50μm | 40μm |

(GRAIN SIZE)

# FIG. 7

FIG. 8